# EUROPEAN PATENT APPLICATION

(11) **EP 4 633 015 A1**
(43) Date of publication of application: **15.10.2025**
(21) Application number: 25169269.5
(22) Date of filing: 08.04.2025
(51) Int. Cl.: H02K 41/02, H02K 7/14, H02K 1/18

(54) **WEIGHT REDUCTION FOR ELECTRIC VEHICLES**

(30) Priority: 12.04.2024 US 202418634553
(71) Applicant: Volvo Car Corporation, 405 31 Göteborg (SE)
(72) Inventor: Orbay, Raik, 405 31 Göteborg (SE)
(74) Representative: Nederlandsch Octrooibureau

(57) **Abstract**

An electric motor can comprise a stator unit comprising a plurality of winding elements, wherein each pair of consecutive winding elements of the plurality of winding elements can be coupled by a dynamic mechanical linkage system comprising a first set of ball joints, a second set of ball joints and a scissor mechanism coupling the first set of ball joints and the second set of ball joints. The electric motor can further comprise a rotor unit comprising at least one shuttle that can be magnetically coupled to the plurality of winding elements and mechanically coupled to a rail structure of the stator unit, wherein the at least one shuttle can follow a circumferential length of the stator unit, such that a circumferential length of the electric motor can be altered according to a circumferential length of the stator unit.

## Description

### TECHNICAL FIELD

The subject disclosure relates to electric vehicle technology and, more specifically, to adaptable electric motors that can be employed in electric vehicles (xEVs) such as hybrid electric vehicles, plug-in hybrid electric vehicles, battery electric vehicles fuel-cell electric vehicles, etc. to reduce the weight of such electric vehicles.

### BACKGROUND

Electric motors and other propulsion elements in an electric vehicle are often large and add to the size and weight of an electric vehicle, while intruding in the cabin of the electric vehicle. For example, in addition to an electric motor, an electric vehicle can comprise a battery, electronics, a gearbox and an inverter, which can be very large components. Additionally, gearboxes employed in electric vehicles can weigh nearly as much as electric motors and generate performance related losses equivalent to those generated by electric motors. The presence of a gearbox can also add to an overall height of components underneath the cabin of the electric vehicle and consume significant real estate available in the electric vehicle. Such propulsion elements result in large and expensive design solutions, which can be undesirable for electric vehicles designed to operate in urban areas.

The above-described background description is merely intended to provide a contextual overview about electric vehicles electric vehicle propulsion and is not intended to be exhaustive.

### SUMMARY

The following presents a summary to provide a basic understanding of one or more embodiments described herein. This summary is not intended to identify key or critical elements, delineate scope of particular embodiments or scope of claims. Its sole purpose is to present concepts in a simplified form as a prelude to the more detailed description that is presented later. In one or more embodiments described herein, systems, methods, and/or devices that can enable adaptable electric motors to reduce the weight of propulsion elements in xEVs are discussed.

According to an embodiment, an electric motor is provided. The electric motor can comprise a stator unit comprising a plurality of winding elements, wherein each pair of consecutive winding elements of the plurality of winding elements can be coupled by a dynamic mechanical linkage system comprising a first set of ball joints, a second set of ball joints and a scissor mechanism that can couple the first set of ball joints and the second set of ball joints.

According to another embodiment, a method is provided. The method can comprise altering a circumferential length of a stator unit of an electric motor by operating at least one dynamic mechanical linkage system, wherein the at least one dynamic mechanical linkage system can be located between a pair of consecutive winding elements of a plurality of winding elements comprised in the stator unit, wherein the at least one dynamic mechanical linkage system can comprise a first set of ball joints, a second set of ball joints and a scissor mechanism that can couple the first set of ball joints and the second set of ball joints.

According to an embodiment, an electric motor is provided. The electric motor can comprise a stator unit comprising a plurality of winding elements, wherein each pair of consecutive winding elements of the plurality of winding elements can be coupled by a dynamic mechanical linkage system comprising a first set of ball joints, a second set of ball joints and a scissor mechanism that can couple the first set of ball joints and the second set of ball joints. The electric motor can further comprise a rotor unit comprising one or more shuttles that can be connected to a wheel of an electric vehicle, wherein the electric motor can operate the wheel without employing a gearbox.

### BRIEF DESCRIPTION OF THE DRAWINGS

One or more embodiments are described below in the Detailed Description section with reference to the following drawings:
FIG. 1 illustrates a block diagram of an example, non-limiting system comprising an electric motor that can be modified in shape and size and that can drive the wheel of an electric vehicle without employing a gearbox in accordance with one or more embodiments described herein.
FIG. 2 illustrates a diagram of an example, non-limiting electric vehicle comprising an electric motor that can be modified in shape and size in accordance with one or more embodiments described herein.
FIG. 3 illustrates a diagram of an example, non-limiting placement of concentrated winding elements in an electric motor in accordance with one or more embodiments described herein.
FIG. 4 illustrates diagrams of example, non-limiting sections of an electric motor that can be modified in shape and size in accordance with one or more embodiments described herein.
FIG. 5 illustrates additional diagrams of example, non-limiting sections of an electric motor that can be modified in shape and size in accordance with one or more embodiments described herein.
FIG. 6 illustrates a diagram of an example, non-limiting section of a permanent magnet-based electric motor that can be modified in shape and size in accordance with one or more embodiments described herein.
FIG. 7 illustrates a diagram of an example, non-limiting section of an inductance-based electric motor that can be modified in shape and size in accordance with one or more embodiments described herein.
FIG. 8 illustrates a diagram of an example, non-limiting section of a reluctance-based electric motor that can be modified in shape and size in accordance with one or more embodiments described herein.
FIG. 9 illustrates a diagram of an example, non-limiting section of wound shuttle-based electric motor that can be modified in shape and size in accordance with one or more embodiments described herein.
FIG. 10 illustrates diagrams of example, non-limiting systems comprising an electric motor that can be modified in shape and size coupled to the wheel of an electric vehicle in accordance with one or more embodiments described herein.
FIG. 11 illustrates diagrams of example, non-limiting views showing an arrangement of the stator unit and the rotor unit of an electric motor that can be modified in shape and size in accordance with one or more embodiments described herein.
FIG. 12 illustrates a diagram of an example, non-limiting system of a stator unit of an electric motor coupled to a wheel of an electric vehicle to drive the wheel without employing a gearbox in accordance with one or more embodiments described herein.
FIG. 13 illustrates a diagram of an example, non-limiting system of a stator unit of an electric motor coupled to a wheel of an electric vehicle via a gearbox in accordance with one or more embodiments described herein.
FIG. 14 illustrates diagrams of example, non-limiting topologies of an electric motor coupled to a wheel of an electric vehicle without employing a gearbox in accordance with one or more embodiments described herein.
FIG. 15 further illustrates diagrams of example, non-limiting topologies of an electric motor in accordance with one or more embodiments described herein.
FIG. 16 illustrates diagrams of example, non-limiting topologies of the stator unit of an electric motor wherein individual stator segments can be interconnected by dynamic mechanical linkage systems in accordance with one or more embodiments described herein.
FIG. 17 illustrates a diagram of example, non-limiting system comprising a dynamic mechanical linkage system that can couple consecutive segments of the stator unit of an electric motor in accordance with one or more embodiments described herein.
FIG. 18 illustrates a diagram of example, non-limiting mechanism to integrate an electric motor that can be modified in shape and size in an electric vehicle in accordance with one or more embodiments described herein.
FIG. 19 illustrates a diagram of example, non-limiting electric vehicle that can employ an electric motor that can be modified in shape and size in accordance with one or more embodiments described herein.
FIG. 20 illustrates a flow diagram of an example, non-limiting method to adjust the circumferential length of the stator unit of an electric motor in accordance with one or more embodiments described herein.

### DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

Electric motors and other propulsion elements like gearboxes in an electric vehicle are often large and add to the size and weight of an electric vehicle, while intruding in the cabin of the electric vehicle. For example, in addition to an electric motor, an electric vehicle can comprise a battery, electronics, a gearbox and an inverter, which can be very large components. For example, gearboxes employed in electric vehicles can weigh nearly as much as electric motors and generate performance related losses equivalent to those generated by electric motors. Moreover, gearboxes also comprise internal elements that lead to friction and losses, impacting the overall propulsion efficiency of the electric motor. The presence of a gearbox can also add to an overall height of components underneath the cabin of the electric vehicle and consume significant real estate available in the electric vehicle. In general, a gearbox can consume significant volume in an electric vehicle, especially in relatively smaller xEVs (e.g., hybrid electric vehicles, plug-in hybrid electric vehicles, battery electric vehicles, fuel-cell electric vehicles, etc.), and this concept is not limited to xEVs designed for urban mobility. Further, electric propulsion can deliver maximum torque at zero revolutions per minute (RPM). Thus, although conventional gearboxes can be advantageous to heavy-duty electric vehicles, they can be undesirable to optimize xEVs for light duty or small urban mobility vehicles. Such propulsion elements can result in large and expensive design solutions, which can be undesirable for electric vehicles designed to operate in urban areas. Thus, a propulsion solution that can reduce the overall size and weight of an electric vehicle while making the electric vehicle affordable to customers can be desirable.

Embodiments described herein include systems and methods that can enable adaptable electric motors for xEVs (e.g., hybrid electric vehicles, plug-in hybrid electric vehicles, battery electric vehicles fuel-cell electric vehicles, etc.). For example, various embodiments herein can provide an electric motor that can be flexible in size and shape and that can be employed to operate an electric vehicle. The electric motor can comprise a stator unit comprising a plurality of winding elements. Each pair of consecutive winding elements of the plurality of winding elements can be coupled by a dynamic mechanical linkage system comprising a first set of ball joints, a second set of ball joints and a scissor mechanism that can couple the first set of ball joints and the second set of ball joints. That is, the stator unit can comprise a plurality of dynamic mechanical linkage systems located between consecutive winding elements of the plurality of winding elements to interconnect the plurality of winding elements. In various embodiments, respective dynamic mechanical linkage systems can have identical configurations. In various embodiments, the plurality of winding elements can be concentrated winding elements or distributed winding elements. In various embodiments, the plurality of winding elements and their soft magnet cores can be designed as telescopic amendments that can impart an articulation ability to respective winding elements of the plurality of winding elements.

The dynamic mechanical linkage system can allow peripheral length modifications of the stator unit (i.e., smaller or larger stator peripheries) by altering the distances between the plurality of winding elements. For example, a scissor mechanism of a dynamic mechanical linkage system can comprise two links that can be coupled to one another via a pin connection. Further, each link of the scissor mechanism can be connected to ball joints at the distal ends of the link, such that a first set of ball joints can connect the two links to a first winding element of a pair of consecutive winding elements, and a second set of ball joints can connect the two links to a second winding element of the pair of consecutive winding elements. The respective ball joints of the first and second sets of ball joints can move inside their respective grooves provided in the winding elements, and in conjunction with the pin connection, such movement of the ball joints can cause the two links of the scissor mechanism to perform a scissoring action such that as the ball joints travel towards each other, the first and second winding elements move farther apart, and as the ball joints travel away from each other, the first and second winding elements move towards each other. In various embodiments, the links of the dynamic mechanical linkage systems can be controlled by an electromagnetic system or a mechatronic system that can be automatized. In various embodiments, a casing or housing of the electric motor can also have contraction and expansion capabilities, such that the overall shape and size of the electric motor can be modified according to the circumferential length of the stator unit, and further based on a positioning of the cabin of the electric vehicle.

In various embodiments, the electric motor can further comprise a rotor unit comprising one or more shuttles that can be magnetically coupled to the plurality of winding elements and mechanically coupled to a rail structure of the stator unit. For example, the one or more shuttles can be coupled to a magnetic flux generated by the plurality of winding elements of the stator unit while being mechanically coupled to a rail structure on which the plurality of winding elements can be positioned, to ensure that the one or more shuttles follow (together or separately) the circumferential length of the stator unit during operation of the electric motor. Two or more phases (e.g., phases A, B, C, etc.) can be designed to allow the phases to travel along the stator unit while being magnetically linked to the shuttles, (e.g., as in a permanent magnet synchronous motor (PMSM) or like motor). In some embodiments, a single phase can be designed to allow the phase to travel along the stator unit while being magnetically linked to the shuttles. Further, a truss system can be employed to directly couple the one or more shuttles of the rotor unit to a wheel of the electric vehicle, to drive the wheel. As previously described, the plurality of winding elements can be interconnected via the dynamic mechanical linkage systems in an articulating loop. The articulating loop can be articulating in length and torsion such that the circumferential length of the stator unit can be altered by repositioning of the plurality of winding elements to generate different levels of torque. For example, the dynamic mechanical linkage systems can be controlled, for example, by an entity (e.g., hardware, software, artificial intelligence (AI), neural network, machine and/or user) operating the electric vehicle to alter the circumferential length of the stator unit to generate a desired amount of torque, based on which the truss system can reposition the shuttles to adapt to the changing circumference of the stator unit to generate the desired amount of torque during operation of the electric vehicle. For example, repositioning the shuttles can change the lengths of the respective moment arms of the shuttles, which can result in different torques. The moment arm for a shuttle can be equal to the shortest distance between the center of the shuttle and the rotational axis/rotational center for the shuttles of the rotor unit. The torque thus generated by the electric motor can be transferred to the wheel via the truss system. Thus, the electric vehicle can be designed to be lighter by eliminating the gearbox for a given vehicle segment.

The embodiments depicted in one or more figures described herein are for illustration only, and as such, the architecture of embodiments is not limited to the systems, devices and/or components depicted therein, nor to any particular order, connection and/or coupling of systems, devices and/or components depicted therein. In the one or more figures presented herein, a three-dimensional (3D) Cartesian coordinate system has been referenced to illustrate different views of the electric motor with respect to an electric vehicle such that the X axis extends from the front of the electric vehicle to the back of the electric vehicle, the Y axis extends laterally from mirror to mirror, the Z axis extends towards the roof of the vehicle, and all three axes (i.e., the X axis, the Y axis and the Z axis) are pair-wise perpendicular.

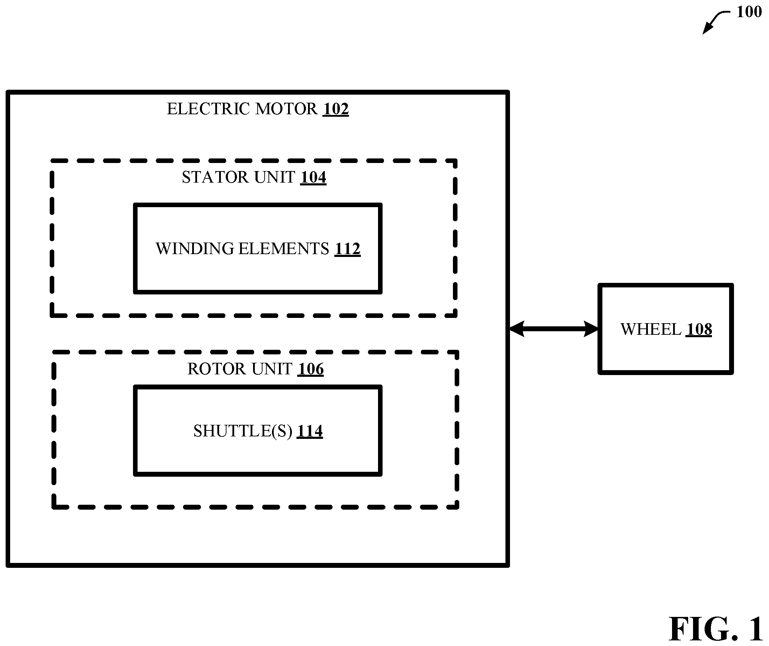

FIG. 1 illustrates a block diagram of an example, non-limiting system 100 comprising an electric motor that can be modified in shape and size and that can drive the wheel of an electric vehicle without employing a gearbox in accordance with one or more embodiments described herein.

Non-limiting system 100 and/or the components of non-limiting system 100 can be employed to solve problems that are highly technical in nature (e.g., related to xEVs, electric motors, electric vehicle propulsion, etc.), that are not abstract and that cannot be performed as a set of mental acts by a human. Non-limiting system 100 and/or components of non-limiting system 100 can be employed to solve new problems that arise through advancements in technologies mentioned above and/or the like. Non-limiting system 100 can provide technical improvements to electric vehicle technologies by improving the performance of an electric vehicle, reducing the weight of propulsion elements in an electric vehicle, reducing the height of propulsion elements in an electric vehicle, and increasing efficiency of core material usage in the electric motor. For example, non-limiting system 100 can allow electric motor 102 to operate wheel 108 without implementing a gearbox due to winding elements 112 being interconnected by dynamic mechanical linkage systems that can be operable to change the overall size and shape of electric motor 102, as explained in greater detail in one or more embodiments. In this regard, electric motor 102 can act as a transaxle. The reduction in weight of an electric vehicle resulting from employing non-limiting system 100 to propel the electric vehicle can be more than about 110 pounds (lb) (i.e., about 50 kilograms (kg)) or 2 - 5 percent (%) of the weight of the electric vehicle without implementing the embodiments disclosed herein.

In various embodiments, non-limiting system 100 can be a propulsion system inside an electric vehicle, such as a small sized city vehicle or a small urban mobility vehicle (e.g., weighing about 220 - 1200 lb). In various embodiments electric motor 102 can be a flexible in size and shape. For example, electric motor 102 can comprise stator unit 104 comprising a plurality of winding elements 112, wherein each pair of consecutive winding elements of the plurality of winding elements 112 can be coupled by a dynamic mechanical linkage system comprising a first set of ball joints, a second set of ball joints and a scissor mechanism that can couple the first set of ball joints and the second set of ball joints. Respective winding elements of the plurality of winding elements 112 can be coupled to each other in an articulating loop, and the plurality of winding elements 112 can be interconnected for structural integrity. Coupling the plurality of winding elements 112 can allow for different implementation morphologies of electric motor 102. The articulating loop can be articulating in length and torsion. In various embodiments, the respective winding elements can comprise soft magnet cores, and the respective winding elements and the soft magnet cores can further allow the plurality of winding elements 112 to form the articulating loop. In various embodiments, the plurality of winding elements 112 can be concentrated winding elements or distributed winding elements.

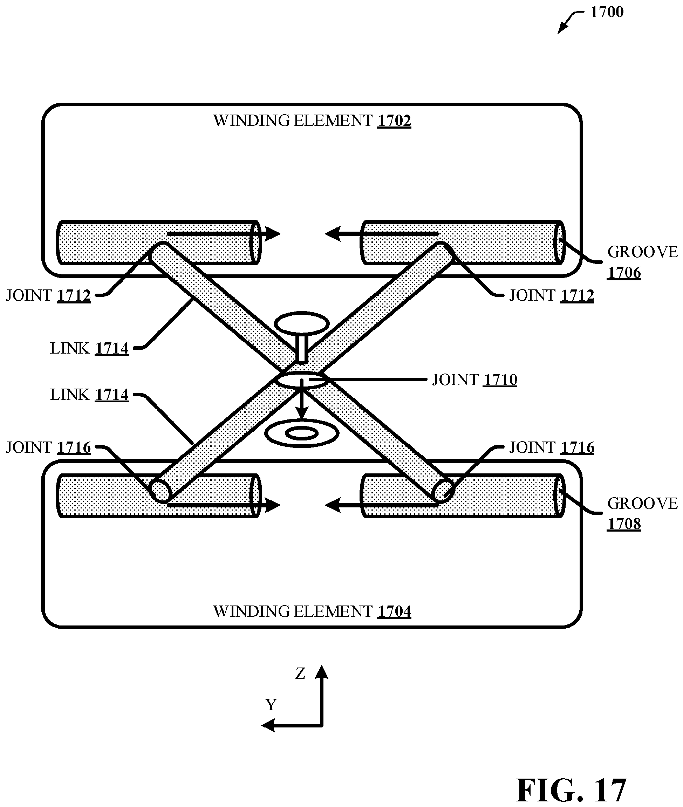

In various embodiments, stator unit 104 can comprise multiple dynamic mechanical linkage systems located between pairs of consecutive winding elements of the plurality of winding elements 112, and respective dynamic mechanical linkage systems of stator unit 104 can have identical configurations comprising two sets of ball joints coupled by a scissor mechanism. For example, in an embodiment, consecutive winding elements of the plurality of winding elements 112 can be coupled by a single dynamic mechanical linkage system that can connect the core of a first winding element and the core a second winding element of the consecutive winding elements. In another embodiment, consecutive winding elements of the plurality of winding elements 112 can be coupled by two or more dynamical mechanical linkage systems linked together as a chain that can connect the core of a first winding element and the core a second winding element of the consecutive winding elements. In yet another embodiment, different pairs of consecutive winding elements of the plurality of winding elements 112 can be coupled by different numbers of dynamic mechanical linkage systems. For example, a first winding element can be connected to a second winding element via a single dynamic mechanical linkage system, the second winding element can be connected to a third winding element via three dynamic mechanical linkage systems, and so on. The configuration of a single dynamic mechanical linkage system is described in greater detail *infra* with reference to FIG. 17.

In various embodiments, the dynamic mechanical linkage system can allow a circumferential length of stator unit 104 to be altered during operation of electric motor 102, by allowing the distances between consecutive winding elements of the plurality of winding elements 112 to be longer or shorter along (i.e., in the direction of) the Z axis. For example, the scissor mechanism of the dynamic mechanical linkage system can comprise two links that can be coupled to one another via a pin connection. Further, each link of the scissor mechanism can be connected to ball joints at the distal ends of the link, such that a first set of ball joints can connect the two links to a first winding element of the pair of consecutive winding elements, and a second set of ball joints can connect the two links to a second winding element of the pair of consecutive winding elements. The first set of ball joints can be located inside grooves provided in the first winding element (e.g., in a slot of the first winding element of stator unit 104), and the second set of ball joints can be located inside grooves provided in the second winding element (e.g., in a slot of the second winding element of stator unit 104). The respective ball joints of the first and second sets of ball joints can move inside their respective grooves along the Y axis (see FIG. 17), and in conjunction with the pin connection, such movement of the ball joints can cause the two links of the scissor mechanism to perform a scissoring action such that as the ball joints travel towards each other, the first and second winding elements can move farther apart (i.e., the gap between the first and second winding elements can increase), and as the ball joints travel away from each other, the first and second winding elements move towards each other (i.e., the gap between the first and second winding elements can decrease). Thus, the ball joints can move along the Y axis in a translational motion and around the Y axis in a rotational motion, and the ball joints can allow the dynamic mechanical linkage systems to move around the Y axis to alter the circumferential length of stator unit 104 during operation of electric motor 102, for example, to drive an electric vehicle. Stated differently, during elongation of the circumferential length of stator unit 104, the plurality of winding elements 112 can move along the X-Z plane, and the ball joints and the plurality of winding elements 112 can have a torsion around the Y axis. In this regard, stator unit 104 can act as a control parameter to reduce the circumference of electric motor 102.

In various embodiments, the links of the dynamic mechanical linkage system described herein can be controlled by an electromagnetic system or a mechatronic system that can be automatized. In various embodiments, a casing or housing of electric motor 102 can have contraction and expansion capabilities, such that the overall shape and size of electric motor 102 can be modified according to the circumferential length of stator unit 104. For example, an activation system can be employed to change the directions of the scissor mechanisms of respective dynamic mechanical linkage systems along the Y axis, or stator unit 104 and rotor unit 106 can be placed in an accordion style casing that can be externally controlled to contract and expand according to the circumferential length of stator unit 104. In some embodiments, the plurality of winding elements 112 can move in empty space around stator unit 104, to allow the shape and size of electric motor 102 to alter according to the shape and size of stator unit 104. In other embodiments, an electric vehicle comprising electric motor 102 can automatically control stator unit 104 such that the plurality of winding elements 112 can automatically reposition themselves in a space allowed by the electric vehicle, for example, based on positioning of the cabin of the electric vehicle. In various embodiments, an entity (e.g., hardware, software, AI, neural network, machine and/or user) operating the electric vehicle can control electric motor 102 via controls accessible to the entity inside the cabin of the electric vehicle, and the electric vehicle can automatically adjust stator unit 104 and the housing/casing of electric motor 102 by employing the mechanisms described herein.

In various embodiments, electric motor 102 can further comprise rotor unit 106. In an embodiment, rotor unit 106 can comprise only one shuttle 114 that can be magnetically coupled to the plurality of winding elements 112 and mechanically coupled to a rail structure (not illustrated) of stator unit 104, and shuttle 114 can follow a circumferential length of stator unit 104. In another embodiment, rotor unit 106 can comprise a plurality of shuttles 114 that can be magnetically coupled to the plurality of winding elements 112, mechanically coupled to the rail structure of stator unit 104 and magnetically or mechanically interconnected to allow the plurality of shuttles 114 to follow the circumferential length of stator unit 104. For example, the plurality of shuttles 114 can be interconnected via magnetic or mechanical junction elements while being positioned on rails attached to the plurality of winding elements 112 of stator unit 104. In an embodiment, consecutive shuttles of the plurality of shuttles 114 can be coupled via dynamic mechanical linkage systems, such as those employed to interconnect the plurality of winding elements 112 of stator unit 104 and illustrated in FIG. 17.

In various embodiments, the movement of the one or more shuttles 114 of rotor unit 106 can allow the circumferential length of electric motor 102 to be altered according to the circumferential length of stator unit 104. For example, each element of the plurality of winding elements 112 can be a coil and each shuttle of the one or more shuttles 114 can comprise magnetic material. The plurality of winding elements 112 (also known as stator chain elements) can create a magnetic flux in the vicinity of the one or more shuttles 114, which can allow the one or more shuttles 114 to be magnetically coupled to each other. Further, the one or more shuttles 114 can be coupled via flux linkage to the magnetic field generated by the plurality of winding elements 112. Since the magnetic field wave is a sinusoidal signal, the one or more shuttles 114 can follow the contours of stator unit 104 via the flux linkage to generate torque. In induction-based solutions, the magnetic field can be created by induced excitation, wherein the plurality of winding elements 112 inside stator unit 104 can create an induced field that can, in turn, create the magnetic field. Reluctance-based solutions can involve generating a reluctance to the magnetic field such that torque can be generated through magnetic reluctance. In permanent magnet-based solutions, one set of north and south poles created inside rotor unit 106 can be connected to the north and south poles of stator unit 104. The rail structure of stator unit 104 can ensure that the one or more shuttles 114 can be magnetically turned around on the rail structure in the desired direction to generate torque, and the rail structure can limit the one or more shuttles 114 from moving along the Z axis. It is to be appreciated that in various embodiments the rail structure can also be a flexible structure that can be automatically adjusted by the electric vehicle according to the circumferential length of stator unit 104.

In various embodiments, increasing a number of shuttles 114 in rotor unit 106 can increase the torque generated by electric motor 102 to propel an electric vehicle. In this regard, in various embodiments, shuttles 114 can be serviceable and retrofittable components such that the number of shuttles 114 in rotor unit 106 can be altered. In various embodiments, the one or more shuttles 114 can be selected from a group consisting of permanent magnet-based shuttles, induction-based shuttles, wound-shuttle, or reluctance-based shuttles. In this regard, electric motor 102 can be a permanent magnet motor, an induction motor or a reluctance-based motor. For example, in a reluctance-based motor, shuttles 114 can try to reposition via magnetic reluctance to the direction of the magnetic flux generated by winding elements 112, in an inductance motor, a pole can be created inside rotor unit 106, and so on.

In various embodiments, respective shuttles of the one or more shuttles 114 of rotor unit 106 can comprise segmented magnetic pole arrangements. For example, each shuttle of rotor unit 106 can comprise multiple segments that can assist the shuttle to follow the shape of stator unit 104 during operation of electric motor 102, and the respective segments can be magnets. In the case of an induction motor, the shuttle can comprise a cage mechanism. In the case of a permanent magnet motor, the shuttle can comprise a magnet that can be segmented such that the north and south poles of the segmented magnets can have the same directions as that of the original single magnet, and the segmented magnets can allow the shuttle to couple to stator unit 104. Thus, shuttles 114 can also be flexible in terms of the configuration and number of inner elements or compartments. In various embodiments, the respective shuttles of shuttles 114 can be separated by buffer zones. The buffer zones can be such that the magnetic flux generated by the plurality of concentrated winding elements 112 can pass through shuttles 114, and the shuttles 114 can nudge each other or barely touch each other.

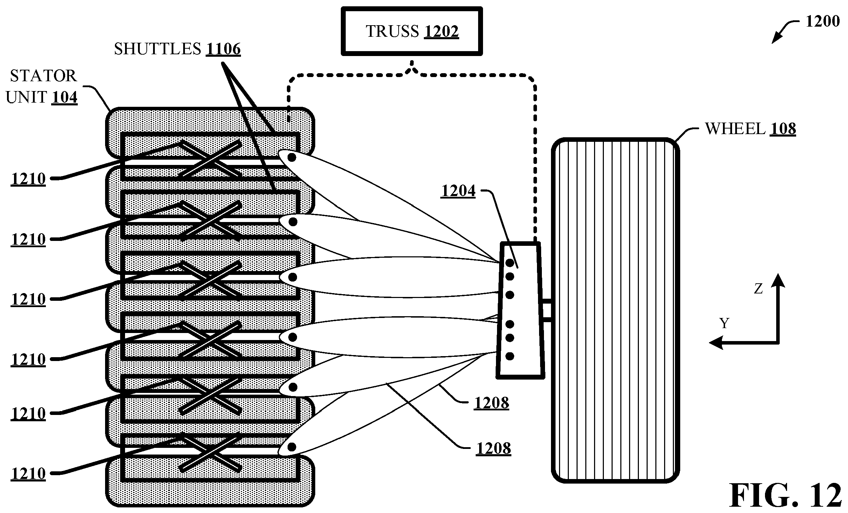

In various embodiments, one or more shuttles 114 of rotor unit 106 can be connected to wheel 108 of an electric vehicle via one or more link arms that can move freely inside grooves provided in the one or more shuttles 114. For example, in an embodiment, respective shuttles 114 of the plurality of shuttles 114 can be connected to respective link arms of a truss system, such as the truss system illustrated in FIG. 12. In another embodiment, a first number of shuttles of the plurality of shuttles 114 can be respectively connected to one or more link arms of the truss system, and individual shuttles of the plurality of shuttles 114 can push or pull one another, via mechanical force or magnetic force, without a second number of shuttles of the plurality of shuttles 114 being connected to the truss system. Stated differently, a first set of shuttles of the plurality of shuttles 114 can be connected to the truss system such that each shuttle of the first set of shuttles can be coupled to one or more link arms of the truss system, a second set of shuttles (i.e., remaining shuttles) of the plurality of shuttles 114 can be disconnected from the truss system, and respective shuttles of the plurality of shuttles 114 can push or pull one another by relying only on the connections between the first set of shuttles and the truss system.

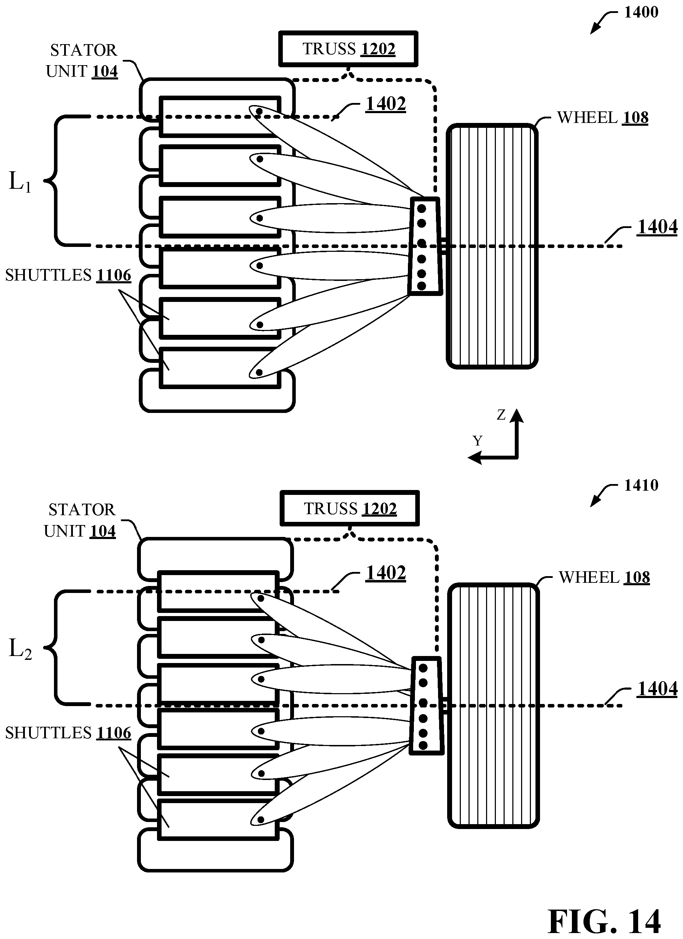

In an embodiment, the one or more shuttles 114 can be connected to wheel 108 without employing a gearbox. For example, in various embodiments, the truss system can accurately control shuttles 114 and control the variable angles of shuttles 114 to enable exact geometric positioning of shuttles 114 in electric motor 102 to generate the amount of torque needed at any given time. Doing so can allow electric motor 102 to operate wheel 108 without a gearbox. For example, an entity (e.g., hardware, software, AI, neural network, machine and/or user) operating the electric vehicle comprising electric motor 102 can alter the circumference of stator unit 104, via controls accessible to the entity inside the cabin of the electric vehicle, to generate a desired amount of torque, based on which the truss system can automatically reposition shuttles 114 according to the changing circumference of stator unit 104. The repositioning of shuttles 114 can cause electric motor 102 to generate the desired amount of torque during operation of the electric vehicle. For example, repositioning shuttles 114 can change the respective moment arms of shuttles 114, which can result in different torques. The moment arm for a shuttle can be equal to the shortest distance between the center of the shuttle and the rotational axis/rotational center for the shuttles. A gearbox can have significant weight and can result in losses that can manifest in the range of an electric vehicle. Further, a gearbox can add to an overall height and length of components underneath the cabin of the electric vehicle and consume the real estate available in the electric vehicle. Thus, eliminating the gearbox can have performance benefits for an electric vehicle as well as economic benefits. For example, the cabin of a small city vehicle is only slightly larger than a passenger, and eliminating the gearbox can allow for an electric vehicle with a compact design with more cabin space for the passenger, and the electric vehicle can be parked in smaller spaces in cities. Such electric vehicles can also be affordable market solutions. In another embodiment, the one or more shuttles 114 can be coupled to wheel 108 via a gearbox that can be much simpler than a traditional gearbox employed in electric vehicles. For example, the one or more shuttles 114 can be coupled to wheel 108 via a gearbox with only one or two gears or via an electromagnetic gearbox. Eliminating the gearbox or employing a simpler gearbox can provide similar design and performance advantages. An explanation of how the torque generated by electric motor 102 can be altered based on repositioning of shuttles 114 is provided in greater detail with reference to FIG. 14.

In various embodiments, the plurality of winding elements 112 of stator unit 104 can be concentrated winding elements or distributed winding elements. In various embodiments, concentrated winding elements can comprise individual coils wrapped around respective slots of stator unit 104, and distributed winding elements can comprise multiple coils that can form a continuous winding that can span multiple slots of stator unit 104. As described earlier, in various embodiments herein, consecutive winding elements of stator unit 104 can be coupled via dynamic mechanical linkage systems, and such dynamic mechanical linkage systems can be located between respective slots of consecutive winding elements. Employing concentrated winding elements in stator unit 104 can reduce the number of end windings, which can lead to more efficient cooling and more efficient usage of core material. Core material refers to the amount of material in rotor unit 106, that is, in the one or more shuttles 114 that can constitute rotor unit 106 of electric motor 102. For example, a permanent magnet-based shuttle can include a soft magnet in the form of an iron core and a permanent magnet that can assist the permanent magnet-based shuttle to magnetically couple to winding elements 112 and an induction-based shuttle can include a soft magnet in the form of a magnetic material with high permeability that can be magnetized and demagnetized depending on rotor positions. In some embodiments, shuttles 114 can be externally excited as electromagnets, and slip rings or like solutions can be implemented on the side of stator unit 104 comprising the railing/rail structure to which shuttles 114 can be coupled.

Concentrated winding elements can also be a lighter solution because less yoke or soft magnet material is needed inside electric motor 102 as compared to a traditional electric motor with a massive yoke. Electric motor 102 can be easier to manufacture with concentrated winding elements, and the concentrated winding elements can enable redundancy in electric motor 102. For example, electric motor 102 can continue to operate and generate torque in case of a partial loss of winding elements 112. For example, in case of an insulation fault, one of the concentrated winding elements can heat up, resulting in some losses. However, due to individual concentrated winding elements being separated from one another, the loss of one concentrated winding element can prevent the loss of the entirety of electric motor 102.

Employing distributed winding elements in stator unit 104 can allow for less noise, vibration and harshness (NVH) in electric motor 102 and a better wave form. However, distributed winding elements can limit the design of electric motor 102 because, as described *supra,* distributed windings can comprise a single continuous phase travelling through different slots of stator unit 104. Thus, a change (e.g., an increase) in the distances between the slots of stator unit 104 as a result of the operation of the dynamic mechanical linkage systems employed to interconnect the plurality of winding elements 112, can result in very small buffer zones between the slots and very little length on the coils of the distributed winding elements.

The various embodiments herein can also be designed as serviceable components, such that electric motor 102 can be retrofitted in an electric vehicle after adding additional winding elements 112 and/or shuttles 114, for example, at vehicle service centers based on the request of an entity/vehicle owner/vehicle operator (e.g., hardware, software, AI, neural network, machine and/or user) associated with the electric vehicle. In some embodiments, the serviceable components can be provided as part of do-it-yourself (DIY) kits to the entity/vehicle owner/vehicle operator (e.g., hardware, software, AI, neural network, machine and/or user) by a car manufacturer (e.g., Volvo^{®}) to allow the entity/vehicle owner/vehicle operator to modify an electric vehicle. For example, the number of shuttles can be increased or decreased based on propulsion needs of an electric vehicle, since an electric motor with one shuttle can comprise less propulsion components and material than an electric motor with six shuttles. For example, the number of winding elements 112 and/or shuttles 114 can be modified based on propulsion needs of an electric vehicle, availability of space based on the size of the electric vehicle, etc. For example, increasing the number of shuttles 114 in rotor unit 106 can increase torque generated by electric motor 102 due to an increase in the amount of magnetic material in shuttles 114. Alternately, the entity/vehicle owner/vehicle operator can prioritize economy over power, in which case the number of winding elements 112 and/or shuttles 114 can be reduced at service centers.

In various embodiments, increasing the number of winding elements 112 in stator unit 104 can increase a periphery of electric motor 102. It is to be appreciated that the number of winding elements 112 (i.e., concentrated winding elements or distributed winding elements) can only be increased while maintaining a phase of electric motor 102. For example, electric motor 102 can be a three-phase motor (i.e., a motor that can receive power from a three-phase current source). Then, stator unit 104 can comprise sets of three winding elements 112 coupled together by dynamic mechanical linkage systems in an articulating loop, wherein each winding element in a set can respectively correspond to respective ones of the three phases of electric motor 102. As such, the number of winding elements 112 can also be increased in sets of three, wherein each element in a new set can respectively correspond to respective phases of electric motor 102. For an electric motor with fewer or additional number of phases (e.g., a two-phase electric motor or a four-phase electric motor), the increment principle/principle to increase the number of winding elements 112 can be consistent with the one described for the three-phase electric motor. In an embodiment, a configuration with permanent magnet-based shuttles in rotor unit 106 and a direct current (DC)-based stator unit 104 can be implemented such that the rail structure of stator unit 104 can allow for current reversals. The embodiments discussed above are described in greater detail *infra* with reference to the subsequent figures.

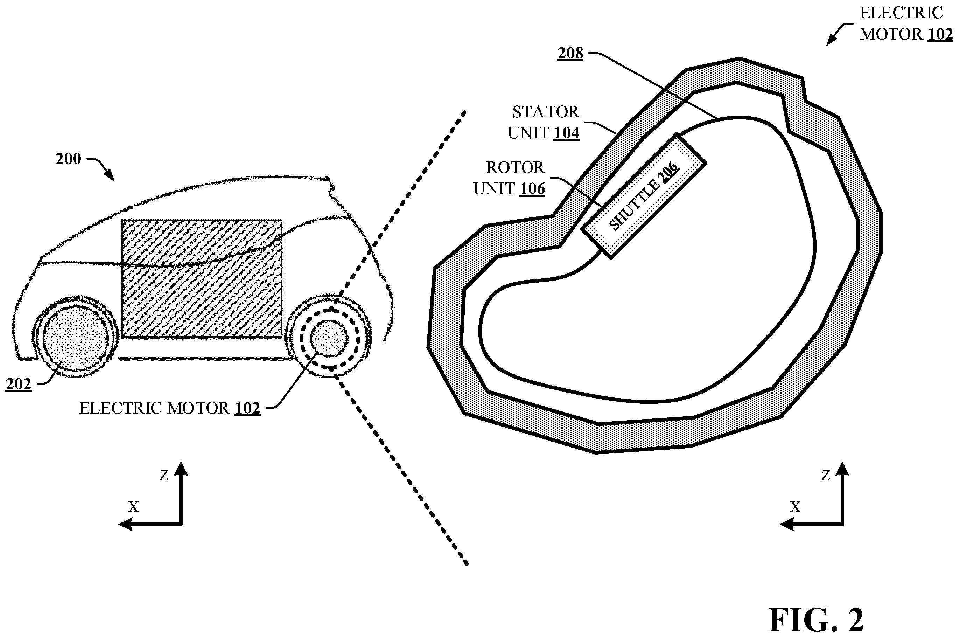

FIG. 2 illustrates a diagram of an example, non-limiting electric vehicle 200 comprising an electric motor that can be modified in shape and size in accordance with one or more embodiments described herein. Repetitive description of like elements and/or processes employed in respective embodiments is omitted for sake of brevity.

With continued reference to the embodiments discussed with reference to FIG. 1, non-limiting electric vehicle 200 can be an urban mobility vehicle, a delivery vehicle, personal transport solution, a mobility solution for disabled individuals or another small vehicle (e.g., weighing about 220 - 1200 lb) that can be employed in locations such as inner cities, airports, shopping malls, etc. In various embodiments, non-limiting electric vehicle 200 can comprise and be operated by electric motor 102 and electric motor 202. FIG. 2 illustrates diagrams of electric motor 102, electric motor 202 and non-limiting electric vehicle 200 as viewed from the X-Z plane. The shaded block in non-limiting electric vehicle 200 is representative of the cabin volume of non-limiting electric vehicle 200. In various embodiments, electric motor 202 can be larger than electric motor 102 and therefore, generate more torque than electric motor 102, and electric motor 202 can have a configuration that is similar to or different than that of electric motor 102. As described elsewhere herein, electric motor 102 can comprise stator unit 104 comprising a plurality of winding elements 112, wherein each pair of consecutive winding elements of the plurality of winding elements 112 can be coupled by a dynamic mechanical linkage system comprising a first set of ball joints, a second set of ball joints and a scissor mechanism that can couple the first set of ball joints and the second set of ball joints. That is, stator unit 104 can comprise multiple dynamic mechanical linkage systems located between consecutive winding elements of the plurality of winding elements 112, and respective dynamic mechanical linkage systems of stator unit 104 can have identical configurations such that each dynamic mechanical linkage system can comprise two sets of ball joints coupled by a scissor mechanism. Electric motor 102 can further comprise rotor unit 106 comprising one or more shuttles 114 that can be magnetically coupled to the plurality of winding elements 112 and mechanically coupled to a rail structure (not illustrated) of stator unit 104, and the one or more shuttles 114 can follow a circumferential length of stator unit 104. In FIG. 2, rotor unit 106 is depicted as comprising only one shuttle, shuttle 206, that can be part of the one or more shuttles 114. Line 208 can indicate the trajectory for shuttle 206 and the area inside the space covered by line 208 can be an empty space.

For the sake of simplicity, FIG. 2 illustrates stator unit 104 as a continuous section; however, it is to be appreciated that stator unit 104 can comprise multiple segments or slots connected by the dynamic mechanical linkage systems, as discussed herein. The dynamic mechanical linkage systems can allow a circumferential length of stator unit 104 to be modified during operation of non-limiting electric vehicle 200. For example, as described with reference to FIG.1, the links of the dynamic mechanical linkage systems can be controlled by an electromagnetic system or a mechatronic system that can be automatized. Further, the coupling between shuttle 206 and stator unit 104 can allow shuttle 206 to follow the changing circumference of stator unit 104, and a casing or housing of electric motor 102 can have contraction and expansion capabilities, such that the overall shape and size of electric motor 102 can be modified according to the circumferential length of stator unit 104 during operation of non-limiting electric vehicle 200. In some embodiments, rotor unit 106 can be designed to compensate for the change in the gaps between winding elements 112 by including several shuttles 114 chained together or by including a single shuttle that is longer. In an embodiment, shuttles 114 can be interconnected by dynamic mechanical linkage systems such as those employed to interconnect winding elements 112.

It should be noted that although electric motor 102 is illustrated as having an arbitrary shape, electric motor 102 can have any suitable shape in practice, depending on various factors such as shape and size of non-limiting electric vehicle 200, lengths of shuttles in rotor unit 106, other geometric considerations, etc. For example, the smallest radius of electric motor 102 as measured from the center of the circumference of electric motor 102 cannot be smaller than the length of shuttle 206. However, the shuttles employed inside rotor unit 106 can be flexible in terms of design and can be designed with appropriate sizes according to different implementations. In general, the embodiments disclosed herein can allow stator unit 104, rotor unit 106 and electric motor 102 to have flexible and arbitrary shapes.

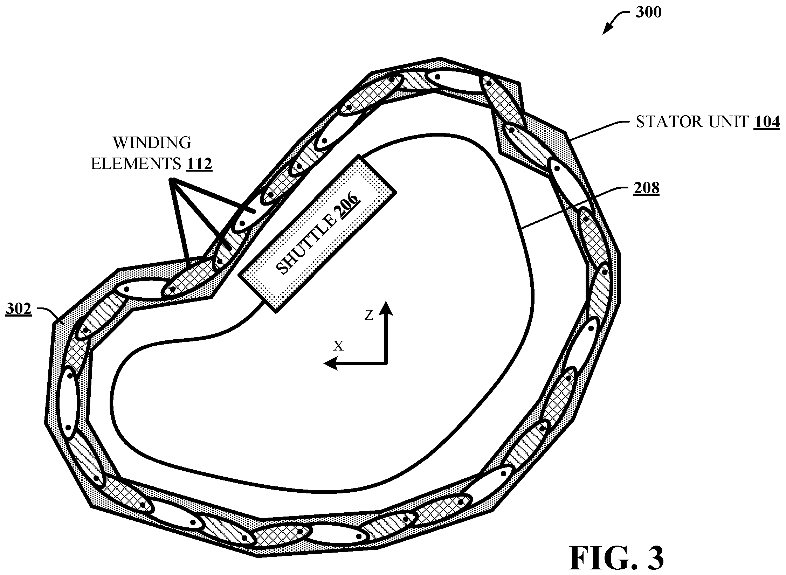

FIG. 3 illustrates a diagram of an example, non-limiting placement 300 of concentrated winding elements in an electric motor in accordance with one or more embodiments described herein. Repetitive description of like elements and/or processes employed in respective embodiments is omitted for sake of brevity.

Non-limiting placement 300 illustrates winding elements 112 of stator unit 104 located in electric motor 102. As illustrated, winding elements 112 can be located along the entire periphery of stator unit 104 marked by numeral 302. Winding elements 112 illustrated in FIG. 3 can be concentrated winding elements. In some embodiments, winding elements 112 can be distributed winding elements that can be similarly located along the periphery of stator unit 104.

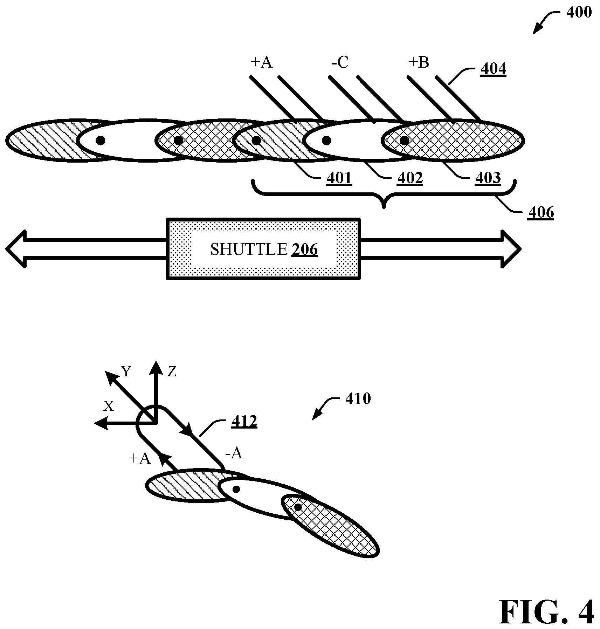

FIG. 4 illustrates diagrams of example, non-limiting sections 400 and 410 of an electric motor that can be modified in shape and size in accordance with one or more embodiments described herein. Repetitive description of like elements and/or processes employed in respective embodiments is omitted for sake of brevity.

With reference to FIG. 3, non-limiting sections 400 and 410 illustrate winding elements 112 of stator unit 104 and shuttle 206 of rotor unit 106 of electric motor 102. Winding elements 112 illustrated in FIGs. 3 and 4 can be concentrated winding elements, and concentrated winding element 401, concentrated winding element 402 and concentrated winding element 403 can represent individual concentrated winding elements of winding elements 112. Group 406 comprising concentrated winding elements 401, 402 and 403 can represent a single group of concentrated winding elements based on a phase of electric motor 102. For example, electric motor 102 can be a three phase motor. The phases, +A, -C and +B, can represent respective phases corresponding to concentrated winding element 401, concentrated winding element 402, and concentrated winding element 402, and additionally represent the three phases for electric motor 102. The notations +A, -C and +B represent a standard manner of indicating a three phase motor. The three phases can follow each other to create a magnetic field inside stator unit 104. Shuttle 206 can be a permanent magnet-based shuttle, an induction-based shuttle, or a reluctance-based shuttle, or a wound-rotor-based shuttle, and shuttle 206 can couple via a flux linkage to the magnetic field generated by stator unit 104. Since the magnetic flux wave can be a sinusoidal signal, shuttle 206 can follow the contours of stator unit 104 through the flux linkage to generate torque. In other words, stator unit 104 can turn rotor unit 106 to excite electric motor 102. In an embodiment, electric motor 102 can also be a two-phase electric motor or other type of motor. Group 406 can be repeated throughout the periphery of stator unit 104, as illustrated in FIGs. 3 and 4. For example, as described elsewhere herein, the respective concentrated winding elements of stator unit 104 can be coupled together in an articulating loop by employing dynamic mechanical linkage systems.

As stated elsewhere herein, each concentrated winding element of stator unit 104 can be a coil. The parallel lines illustrated under the phase notations in FIG. 4 (e.g., at 404) indicate a direction of travel of each coil, which is shown in greater detail in non-limiting section 410. For example, each concentrated winding element can travel in the direction of the Y axis and along the path illustrated by path 412, whereas shuttle 206 can travel in a direction parallel to the X-Z plane and in a rotational motion around the Y axis. The direction of travel of the coil towards the positive Y axis can indicate a positive phase (e.g., +A for concentrated winding element 401) and the direction of travel towards the negative Y axis can indicate a negative phase (e.g., -A for concentrated winding element 401). The direction of the Y axis illustrated in FIG. 4 should be interpreted as the positive Y axis travelling out of the plane of the page/along a lateral direction of the electric vehicle and at 90 degrees (90°) to the X and the Z axes. Current flowing through each coil of the respective winding elements 112 of stator unit 104 can create an electromagnet. Additionally, the size of each winding element can depend on the circumference of electric motor 102, a class of the electric vehicle for which electric motor 102 can be designed, usage of the electric vehicle, and/or other factors. It is to be appreciated that although FIG. 4 illustrates concentrated winding elements, the embodiments discussed herein can also be applicable to distributed winding elements.

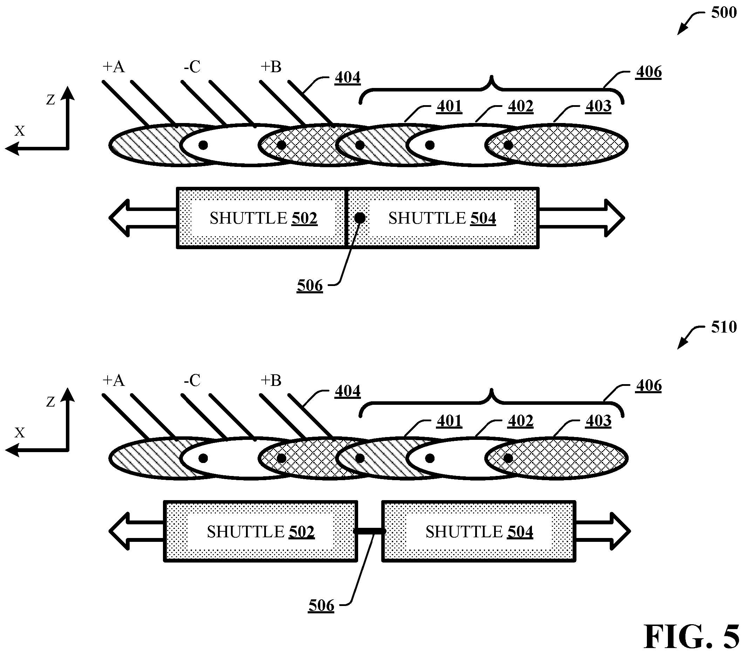

FIG. 5 illustrates additional diagrams of example, non-limiting sections 500 and 510 of an electric motor that can be modified in shape and size in accordance with one or more embodiments described herein. Repetitive description of like elements and/or processes employed in respective embodiments is omitted for sake of brevity.

As discussed in various embodiments, rotor unit 106 of electric motor 102 can comprise one or more shuttles 114. For example, electric motor 102 can be modified by adding or removing shuttles 114 based on the type of electric vehicle. With continued reference to the embodiments disclosed heretofore in this specification, non-limiting section 500 illustrates an embodiment in which rotor unit 106 can comprise two shuttles, shuttle 502 and shuttle 504, that can represent individual shuttles of shuttles 114. In other embodiments, rotor unit 106 can comprise any suitable number of shuttles.

In an embodiment, respective shuttles of rotor unit 106 can be coupled via dynamic mechanical linkage systems such as illustrated in FIG. 17 and similar to those employed to interconnect winding elements 112. For example, connection 506 can be a dynamic mechanical linkage system comprising a first set of ball joints, a second set of ball joints, and a scissor mechanism that can couple the first set of ball joints and the second set of ball joints to allow the distance between shuttle 502 and shuttle 504 to change. In this regard, non-limiting section 500 illustrates shuttles 502 and 504 as being closer to each other, and non-limiting section 510 illustrates shuttles 502 and 504 as being farther apart. For example, the scissor mechanism of the dynamic mechanical linkage system can comprise two links that can be coupled to one another via a pin connection. Further, each link of the scissor mechanism can be connected to ball joints at the distal ends of the link, such that the first set of ball joints can connect the two links to shuttle 502, and the second set of ball joints can connect the two links to shuttle 504. The first set of ball joints can be located inside grooves provided in shuttle 502, and the second set of ball joints can be located inside grooves provided in shuttle 504.

The respective ball joints of the first and second sets of ball joints can move inside their respective grooves along the Y axis (travelling into and out of the plane of the page), and in conjunction with the pin connection, such movement of the ball joints can cause the two links of the scissor mechanism to perform a scissoring action such that as the ball joints travel towards each other, shuttle 502 and shuttle 504 move farther apart (i.e., the gap between shuttles 502 and 504 can increase), and as the ball joints travel away from each other, shuttle 502 and shuttle 504 move towards each other (i.e., the gap between shuttle 502 and shuttle 504 can decrease). Thus, the ball joints can move along the Y axis in a translational motion and around the Y axis in a rotational motion, and the ball joints can allow the dynamic mechanical linkage systems to move around the Y axis to alter the circumferential length of rotor unit 106 during operation of electric motor 102, for example, to drive an electric vehicle. Connection 506 can impart a flexible shape to rotor unit 106.

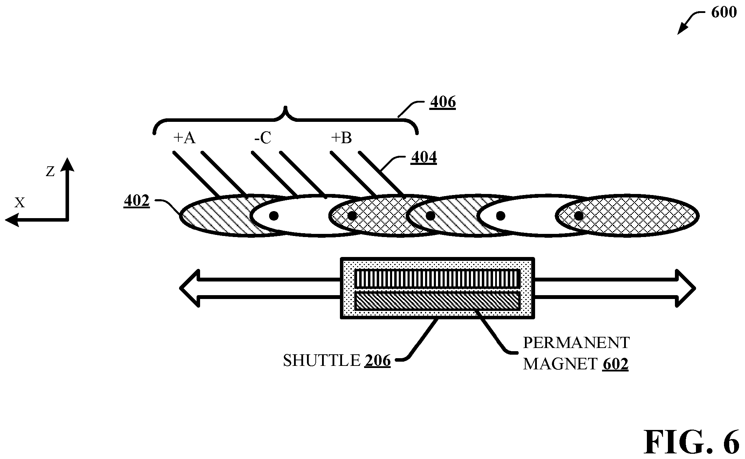

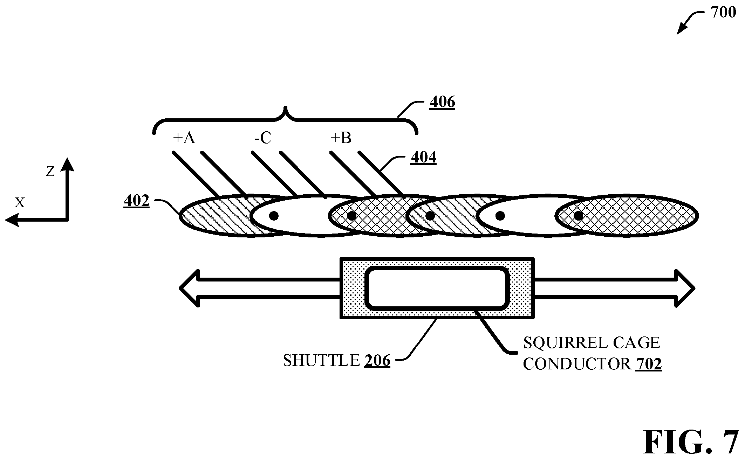

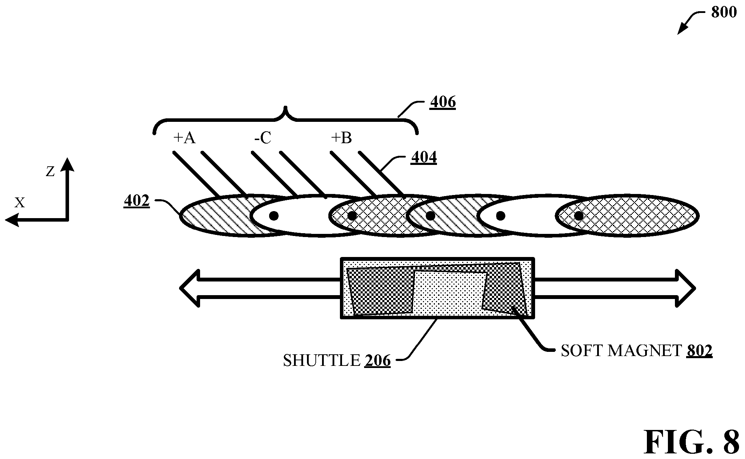

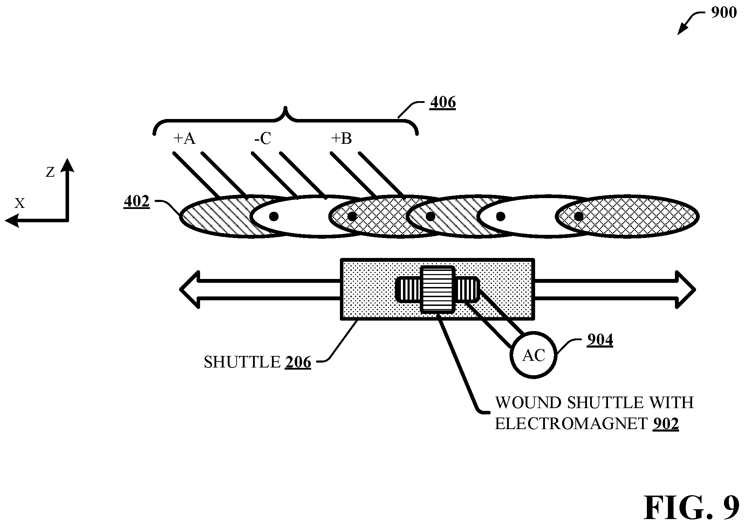

FIGs. 6 - 9 illustrate additional embodiments of electric motor 102 and rotor unit 106. FIG. 6 illustrates a diagram of an example, non-limiting section 600 of a permanent magnet-based electric motor that can be modified in shape and size in accordance with one or more embodiments described herein. FIG. 7 illustrates a diagram of an example, non-limiting section 700 of an inductance-based electric motor that can be modified in shape and size in accordance with one or more embodiments described herein. FIG. 8 illustrates a diagram of an example, non-limiting section 800 of a reluctance-based electric motor that can be modified in shape and size in accordance with one or more embodiments described herein. FIG. 9 illustrates a diagram of an example, non-limiting section 900 of wound shuttle-based electric motor that can be modified in shape and size in accordance with one or more embodiments described herein. Repetitive description of like elements and/or processes employed in respective embodiments is omitted for sake of brevity.

In various embodiments, electric motor 102 can comprise stator unit 104 comprising a plurality of winding elements 112, wherein consecutive winding elements of the plurality of winding elements 112 can be coupled by a dynamic mechanical linkage system comprising a first set of ball joints, a second set of ball joints and a scissor mechanism that can couple the first set of ball joints and the second set of ball joints. That is, stator unit 104 can comprise multiple dynamic mechanical linkage systems that can interconnect the plurality of winding elements 112, and respective dynamic mechanical linkage systems of stator unit 104 can have identical configurations. Electric motor 102 can further comprise rotor unit 106 comprising one or more shuttles 114 that can be magnetically coupled to the plurality of winding elements 112 and mechanically coupled to a rail structure of stator unit 104, and the one or more shuttles 114 can follow a circumferential length of stator unit 104. In some embodiments, rotor unit 106 can comprise multiple shuttles 114 that can be interconnected by mechanical or magnetic connections. In various embodiments, the one or more shuttles 114 can be permanent magnet-based shuttles, induction-based shuttles, wound-rotor-based shuttles, or reluctance-based shuttles. Accordingly, in various embodiments, electric motor 102 can be a permanent magnet motor, an induction motor, externally excited shuttle motor or a reluctance-based motor.

For example, in an embodiment, electric motor 102 can be a permanent magnet motor/permanent magnet-based electric motor, where shuttle 206 can comprise permanent magnet 602. Permanent magnet 602 can magnetically link or couple to the magnetic flux generated by winding elements 112 of stator unit 104 to generate torque. In embodiments where rotor unit 106 comprises a plurality of shuttles 114, each of the plurality of shuttles 114 can comprise respective permanent magnets. In FIG. 6, permanent magnet 602 is illustrated as two horizontal bars that can represent the north and south poles of permanent magnet 602.

In another embodiment, electric motor 102 can be an induction motor/induction-based electric motor, wherein shuttle 206 can comprise squirrel cage conductor 702. Flux induced in squirrel cage conductor 702 can link or couple to the magnetic flux generated by winding elements 112 of stator unit 104 to generate torque. In embodiments where rotor unit 106 comprises a plurality of shuttles 114, each of the plurality of shuttles 114 can comprise respective squirrel cage conductors. In FIG. 7, squirrel cage conductor 702 is illustrated as a block that can represent a squirrel cage-type container.

In yet another embodiment, electric motor 102 can be a reluctance-based motor/reluctance-based electric motor, wherein shuttle 206 can comprise soft magnet 802. Reluctance of soft magnet 802 can repel the magnetic flux generated by winding elements 112 of stator unit 104 to generate torque. In embodiments where rotor unit 106 comprises a plurality of shuttles 114, each of the plurality of shuttles 114 can comprise respective soft magnets. In FIG. 8, soft magnet 802 is illustrated as a block with a specific shape that soft magnet 802 can have.

In some embodiments, electric motor 102 can also be an externally excited/wound shuttle motor, wherein shuttle 206 can comprise a wound-shuttle with electromagnet 902 driven by alternating current (AC) supply 904. In such embodiments, a flux generated by an externally excited three or one phase shuttle can be attracted to the magnetic flux generated by winding elements 112 of stator unit 104. In embodiments where rotor unit 106 comprises a plurality of shuttles 114, each of the plurality of shuttles 114 can comprise respective wound shuttles with electromagnets and AC supplies.

In one or more embodiments, electric motor 102 can be a permanent magnet motor/permanent magnet-based electric motor, where shuttle 206 can be a permanent magnet-based shuttle comprising a squirrel cage that can be advantageous for some transient parts of the operation of electric motor 102 during start-up. In general, electric motor 102 can employ hybrid solutions comprising permanent magnets cooperating with reluctance elements or similar embodiments of hybrid configurations.

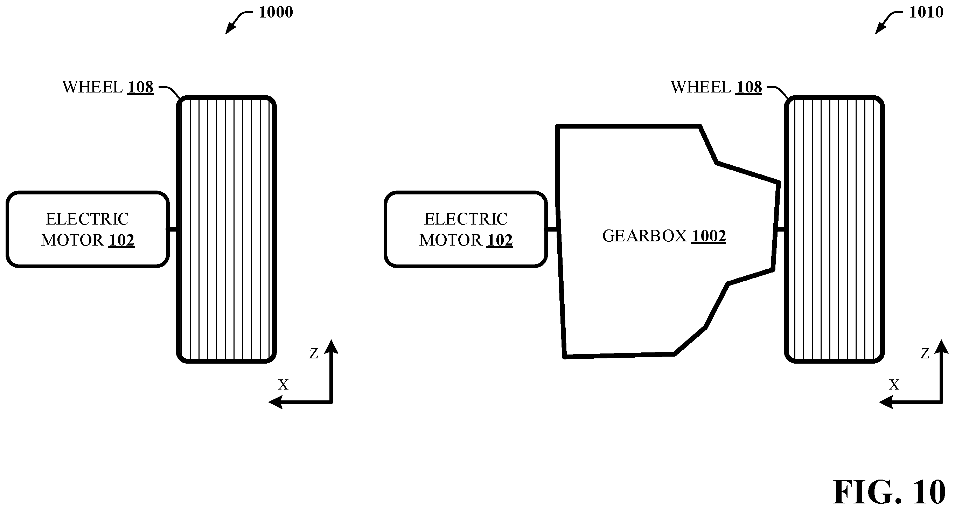

FIG. 10 illustrates diagrams of example, non-limiting systems 1000 and 1010 comprising an electric motor that can be modified in shape and size coupled to the wheel of an electric vehicle in accordance with one or more embodiments described herein. Repetitive description of like elements and/or processes employed in respective embodiments is omitted for sake of brevity.

As described *supra,* electric motor 102 can operate wheel 108 without employing a gearbox, as illustrated by non-limiting system 1000. For example, the one or more shuttles 114 of rotor unit 106 can be connected to wheel 108 via a truss system that can accurately control shuttles 114 and control the variable phase angles of shuttles 114 to enable exact geometric positioning of shuttles 114 in electric motor 102 to generate the amount of torque needed at any given time. Doing so can allow electric motor 102 to operate wheel 108 without a gearbox. More specifically, an entity (e.g., hardware, software, AI, neural network, machine and/or user) operating the electric vehicle comprising electric motor 102 can alter the circumference of stator unit 104, via controls accessible to the entity inside the cabin of the electric vehicle, to generate a desired amount of torque, based on which the truss system can automatically reposition shuttles 114 according to the changing circumference of stator unit 104. The repositioning of shuttles 114 can cause electric motor 102 to generate the desired amount of torque during operation of the electric vehicle. For example, repositioning shuttles 114 can change the lengths of the respective moment arms of shuttles 114, which can result in different torques. The moment arm for a shuttle can be equal to the shortest distance between the center of the shuttle and the rotational axis/rotational center for the shuttles.

A gearbox, such as gearbox 1002 illustrated by non-limiting system 1010, can have significant weight and can result in losses that can manifest in the range of an electric vehicle. For example, gearboxes can weigh nearly as much as electric motors and can have losses equivalent to those of electric motors. The losses resulting from gearboxes can adversely impact the overall efficiency of electric vehicles. Further, a gearbox can consume the real estate available in the electric vehicle by adding to an overall height of components underneath the cabin of the electric vehicle, and mar the payload in the electric vehicle by adding to the transaxle length of propulsion elements in the electric vehicle. Thus, eliminating the gearbox can have performance benefits for an electric vehicle as well as economic benefits. For example, the cabin of a small city vehicle is only slightly larger than a passenger, and eliminating the gearbox can allow for an electric vehicle with a compact design with more cabin volume available to the passenger and an electric vehicle that can be parked in smaller spaces in cities, such as personal transport vehicles designed for individuals with disabilities, manned or autonomous goods delivery vehicles designed to maximize the amount of goods that can be transported and to maximize the volume available for the goods. Such electric vehicles can also be affordable market solutions. Stator unit 104 comprising the plurality of winding elements 112 and the design of electric motor 102 as a circumferential periphery can allow the gearbox to be eliminated. In another embodiment, the one or more shuttles 114 can be coupled to wheel 108 via a gearbox that can be much simpler than a traditional gearbox (e.g., gearbox 1002) employed in electric vehicles. For example, the one or more shuttles 114 can be coupled to wheel 108 via a gearbox with only one or two gears or via an electromagnetic gearbox. Eliminating the gearbox or employing a simpler gearbox can provide similar design, efficiency and performance advantages.

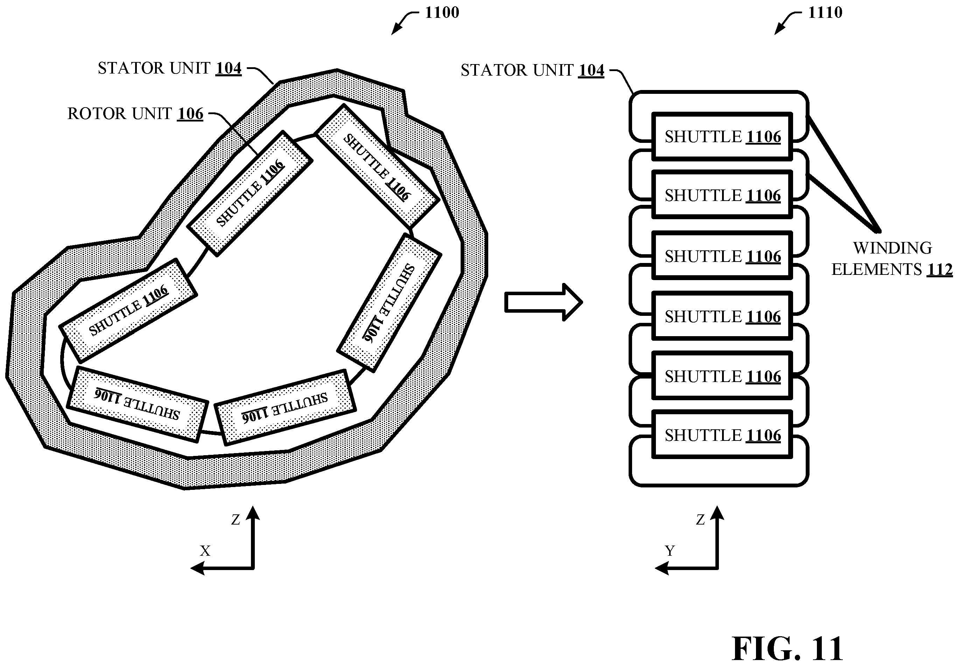

FIG. 11 illustrates diagrams of example, non-limiting views 1100 and 1110 showing an arrangement of the stator unit and the rotor unit of an electric motor that can be modified in shape and size in accordance with one or more embodiments described herein. Repetitive description of like elements and/or processes employed in respective embodiments is omitted for sake of brevity.

In various embodiments, electric motor 102 can comprise stator unit 104 comprising a plurality of winding elements 112, wherein consecutive winding elements of the plurality of winding elements 112 can be coupled by one or more dynamic mechanical linkage systems, and wherein each dynamic mechanical linkage system can comprise a first set of ball joints, a second set of ball joints and a scissor mechanism that can couple the first set of ball joints and the second set of ball joints. Winding elements 112 can be concentrated winding elements or distributed winding elements. Electric motor 102 can further comprise rotor unit 106 comprising one or more shuttles 114 that can be magnetically coupled to the plurality of winding elements 112 and mechanically coupled to a rail structure of stator unit 104, and the one or more shuttles 114 can follow a circumferential length of stator unit 104. For example, rotor unit 106 can comprise a plurality of shuttles 1106 that can be interconnected by mechanical or magnetic connections. Electric motor 102 can be deployed as a closed surface comprising stator unit 104 and rotor unit 106. In this regard, electric motor 102 can have the functionalities of a linear electric motor while having a flexible shape that can be modified during operation of electric motor 102, for example, to operate an electric vehicle or a wheel of an electric vehicle. In various embodiments, electric motor 102 can be modified or adapted to the propulsion needs of an electric vehicle by adding or removing winding elements 112 and/or shuttles 114.

FIG. 11 illustrates an embodiment in which rotor unit 106 can comprise six shuttles 1106. Shuttles 1106 can represent individual shuttles of shuttles 114. Non-limiting view 1100 illustrates a view of electric motor 102 with respect to the X-Z plane and non-limiting view 1110 illustrates a view of electric motor 102 with respect to the Y-Z plane. Non-limiting view 1110 further illustrates a segmented view of stator unit 104, wherein individual segments can represent individual winding elements 112. As described in one or more embodiments and as further illustrated in FIG. 12, winding elements 112 can be interconnected by dynamic mechanical linkage systems.

FIG. 12 illustrates a diagram of an example, non-limiting system 1200 of a stator unit of an electric motor coupled to a wheel of an electric vehicle to drive the wheel without employing a gearbox in accordance with one or more embodiments described herein. Repetitive description of like elements and/or processes employed in respective embodiments is omitted for sake of brevity.

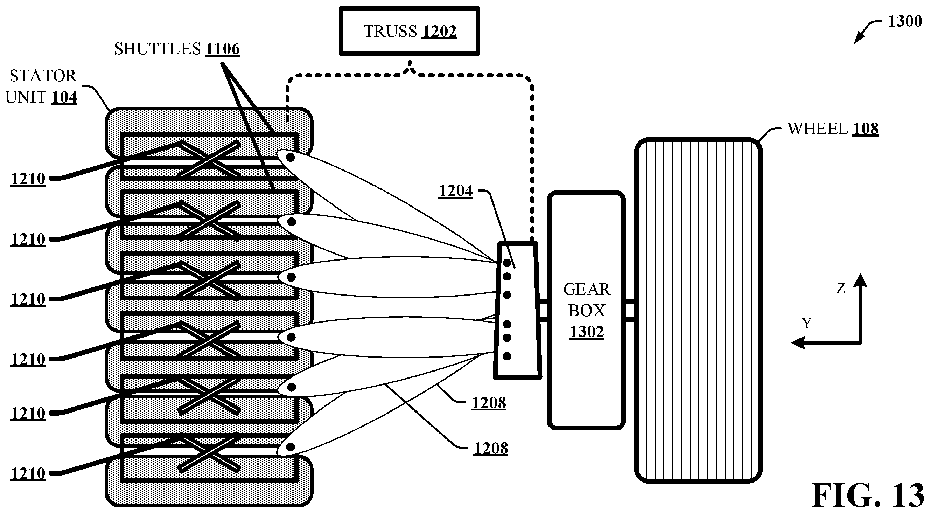

With continued reference to FIG. 11, non-limiting system 1200 illustrates consecutive winding elements of the plurality of winding elements 112 as being coupled by dynamic mechanical linkage systems 1210. Dynamic mechanical linkage systems 1210 can allow a circumferential length of stator unit 104 to be altered during operation of electric motor 102, by allowing the distances between consecutive winding elements of the plurality of winding elements 112 to vary. Each dynamic mechanical linkage system 1210 can have a configuration such as that illustrated in FIG. 17. For example, a scissor mechanism of the dynamic mechanical linkage system can comprise two links that can be coupled to one another via a pin connection. Further, each link of the scissor mechanical can be connected to ball joints at the distal ends of the link, such that a first set of ball joints can connect the two links to a first winding element of the pair of consecutive winding elements, and a second set of ball joints can connect the two links to a second winding element of the pair of consecutive winding elements. The first set of ball joints can be located inside grooves provided in the first winding element, for example, inside grooves provided in a slot of the first winding element of stator unit 104. Similarly, the second set of ball joints can be located inside grooves provided in the second winding element, for example, inside grooves provided in a slot of the second winding element of stator unit 104. In FIGs. 12 and 13, winding elements 112 of stator unit 104 are illustrated as shaded segments and shuttles 1106 are illustrated as rectangles with a translucent shading to show that the dynamic mechanical linkage systems 1210 are employed to couple winding elements 112.

The respective ball joints of the first and second sets of ball joints can move inside their respective grooves along the Y axis, and in conjunction with the pin connection, such movement of the ball joints can cause the two links of the scissor mechanism to perform a scissoring action such that as the ball joints travel towards each other, the first and second winding elements move farther apart (i.e., the gap between the first and second winding elements can increase), and as the ball joints travel away from each other, the first and second winding elements move towards each other (i.e., the gap between the first and second winding elements can decrease). Thus, the ball joints can move along the Y axis in a translational motion and around the Y axis in a rotational motion, and the ball joints can allow the dynamic mechanical linkage systems to move around the Y axis to alter the circumferential length of stator unit 104 during operation of electric motor 102, for example, to drive an electric vehicle. Stated differently, during elongation of the circumferential length of stator unit 104, the ball joints and the plurality of winding elements 112 can have a torsion around the Y axis. In this regard, stator unit 104 can act as a control parameter to reduce the circumference of electric motor 102. Due to flexibility in the shape of stator unit 104 as a result of the dynamic mechanical linkage systems, the torsion of winding elements 112 can be adjusted along with the circumferential length of electric motor 102. In various embodiments, the links of the dynamic mechanical linkage systems can be controlled by an electromagnetic system or a mechatronic system that can be automatized. In various embodiments, a casing or housing of electric motor 102 can have contraction and expansion capabilities, such that the overall shape and size of electric motor 102 can be modified according to the circumferential length of stator unit 104 and a cabin of the electric vehicle.

FIG. 12 further illustrates truss 1202 that can couple electric motor 102 to wheel 108. Truss 1202 can be a truss system with link arms that can couple the plurality of shuttles 114 to wheel 108 (e.g., a tire of an electric vehicle) to drive/rotate wheel 108. For example, the torque generated by electric motor 102 can be transmitted to wheel 108 via truss 1202. In an embodiment, the torque generated by electric motor 102 can be utilized to rotate multiple tires of an electric vehicle, for example, in low-speed applications wherein an electric vehicle can be propelled by a single electric motor. In another embodiment, multiple electric motors having the same configuration as that of electric motor 102 can be employed to rotate respective tires of an electric vehicle, for example, in small urban mobility electric vehicles that can be propelled by multiple electric motors.

In an embodiment, respective shuttles 1106 can be connected to respective link arms 1208 of truss 1202. In another embodiment, a first number of shuttles 1106 can be connected to link arms 1208 and a second number of shuttles 1106 can be disconnected from truss 1202. For example, although non-limiting system 1200 illustrates individual shuttles 1106 as being coupled to respective link arms 1208, in an embodiment, a first number of shuttles 1106 (e.g., four out of six shuttles) can be coupled to truss 1202 such that each of the four shuttles can be respectively coupled to one or more link arms 1208 of truss 1202. Further, the remaining shuttles (e.g., two out of six shuttles) can remain uncoupled from truss 1202, and the four shuttles connected to truss 1202 can move (e.g., push or pull) all six shuttles 1106 of the electric motor. Such embodiments can reduce the number of link arms 1208 employed in electric motor 102 and consequently reduce the weight of electric motor 102. In various embodiments, truss 1202 can be designed to have link arms 1208 that can be mechanically coupled to a swashplate or hub (e.g., swashplate or hub 1204 in FIGs. 12 and 13) via pins towards the side of wheel 108. In an embodiment, link arms 1208 of truss 1202 can be mechanically coupled to shuttles 1106 via pins. In another embodiment, individual link arms 1208 can be mechanically coupled to shuttles 1106 via a rail system that can allow link arms 1208 to move laterally along (i.e., in the direction of) the Y axis. In this embodiment, link arms 1208 can move freely along the Y axis, as governed by the shape of stator unit 104, in rails grooved on the side of shuttles 1106 that is not connected to the rail system of stator unit 104. Such coupling can allow link arms 1208 to move along with shuttles 1106. It is to be appreciated that the design of truss 1202 described herein is exemplary and truss 1202 can have different designs and coupling mechanisms in different scenarios.

In an embodiment, a design of truss 1202 can allow an entity (e.g., hardware, software, AI, neural network, machine and/or user) operating an electric vehicle comprising non-limiting system 1200 to control the positioning of shuttles 1106, via controls accessible to the entity, such that the shape and size of rotor unit 106 and the shape and size of electric motor 102 can be modified according to the circumferential length of stator unit 104. In an embodiment, the entity can be a person and the controls to adjust the positioning of shuttles 1106 can be accessible to the person inside the cabin of the electric vehicle. For example, the entity can reposition shuttles 1106 such that the topmost shuttle 1106 can move in a direction towards the front of the electric vehicle, the bottommost shuttle 1106 to move in a direction towards the back of the electric vehicle, and shuttles 1106 can perform a rotational motion around the Y axis. As described above, truss 1202 can be coupled to shuttles 1106 via pins and a rail system that can allow truss 1202 to accommodate such repositioning of shuttles 1106. In this regard, truss 1202 can be designed to be functional for various potential movements of shuttles 1106 such that the torque generated by electric motor 102 can continue to be transmitted to wheel 108 via truss 1202 under various configurations of shuttles 1106.

FIG. 13 illustrates a diagram of an example, non-limiting system 1300 of a stator unit of an electric motor coupled to a wheel of an electric vehicle via a gearbox in accordance with one or more embodiments described herein. Repetitive description of like elements and/or processes employed in respective embodiments is omitted for sake of brevity.

FIG. 13 illustrates an embodiment where electric motor 102 can be coupled to wheel 108 via gearbox 1302. In non-limiting system 1200, truss 1202 can be designed to have the capabilities of a gearbox to eliminate the need for a gearbox. For example, truss 1202 can accurately control shuttles 1106 and variable phase angles of shuttles 114 to enable exact geometric positioning of shuttles 1106 in electric motor 102. On the contrary, non-limiting system 1300 can be employed with gearbox 1302. With continued reference to at least FIGs. 10 and 12, gearbox 1302 can be a simple, lightweight gearbox with only one or two gears, or gearbox 1302 can be an electromagnetic gearbox.

FIG. 14 illustrates diagrams of example, non-limiting topologies 1400 and 1410 of an electric motor coupled to a wheel of an electric vehicle without employing a gearbox in accordance with one or more embodiments described herein. Repetitive description of like elements and/or processes employed in respective embodiments is omitted for sake of brevity.

With continued reference to the embodiments discussed with reference to at least FIGs., 11 - 13, truss 1202 can be coupled to shuttles 1106 via pins and a rail system that can allow truss 1202 to accommodate such repositioning of shuttles 1106. In various embodiments, such repositioning of shuttles 1106 can cause the respective moment arms for shuttles 1106 to also change. For example, upon repositioning shuttles 1106, the topology of electric motor 102 can change from non-limiting topology 1400 to non-limiting topology 1410, and the distance between line 1402 and line 1404 can change from L1 to L2, wherein L1 > L2. Line 1402 can be an imaginary line passing through the center of the topmost shuttle 1106, and line 1404 can be an imaginary line passing through the center of stator unit 104 such that line 1404 can pass through a rotational center of shuttles 114. The moment arm for a shuttle can be equal to the shortest distance between the center of the shuttle and the rotational axis/rotational center for the shuttles. The positioning of the connections of the link arms (e.g., link arms 1208) of truss 1202 can determine the lengths of the moment arms for respective shuttles of shuttles 1106. For example, non-limiting topology 1400 can illustrate a maximum torque mode for electric motor 102, and in non-limiting topology 1400, the link arm for the topmost shuttle 1106 can be at the extreme position along the negative (-) Y axis resulting in the moment arm length, L1. Similarly, non-limiting topology 1410 illustrates the least torque mode of electric motor 102, and in non-limiting topology 1410, the link arm for the topmost shuttle 1106 can be at the extreme position along the positive (+) Y axis, resulting in the moment arm length, L2.

For example, for the topmost shuttle 1106, the moment arm can be equal to the distance L1 in non-limiting topology 1400 and the distance L2 in non-limiting topology 1410. Thus, the moment arm for the topmost shuttle 1106 can be longer in non-limiting topology 1400 than the equivalent moment arm in non-limiting topology 1410 (L1 > L2). A longer moment arm can result in a greater torque (*τ*). Thus, if L1 > L2, then *τ*₁ > *τ*₂, wherein τ₁ can be the torque generated by electric motor 102 given non-limiting topology 1400 and τ₂ can be the torque generated by electric motor 102 given non-limiting topology 1410.

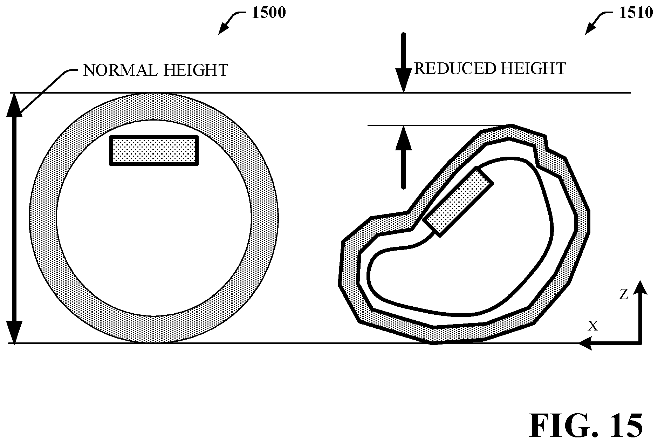

FIG. 15 illustrates diagrams of example, non-limiting topologies 1500 and 1510 of an electric motor in accordance with one or more embodiments described herein. Repetitive description of like elements and/or processes employed in respective embodiments is omitted for sake of brevity.

Non-limiting topology 1500 corresponds to non-limiting topology 1400 and non-limiting topology 1510 corresponds to non-limiting topology 1410. That is, non-limiting topology 1500 illustrates the topology for electric motor 102 corresponding to the position of topmost shuttle 1106 at L1, and non-limiting topology 1510 illustrates the topology for electric motor 102 corresponding to the position of topmost shuttle 1106 at L2. The position of topmost shuttle 1106 at distance L1 can indicate a lower ground clearance for an electric vehicle employing electric motor 102, and the position of the topmost shuttle 1106 at distance L2 can indicate a higher ground clearance for an electric vehicle employing electric motor 102. Ground clearance can be defined as the least distance between the lower end of the vehicle body and the ground. Evidently, non-limiting topology 1510 can result in a reduced height for stator unit 104 resulting from a repositioning of shuttles 1106 into a more compact structure.

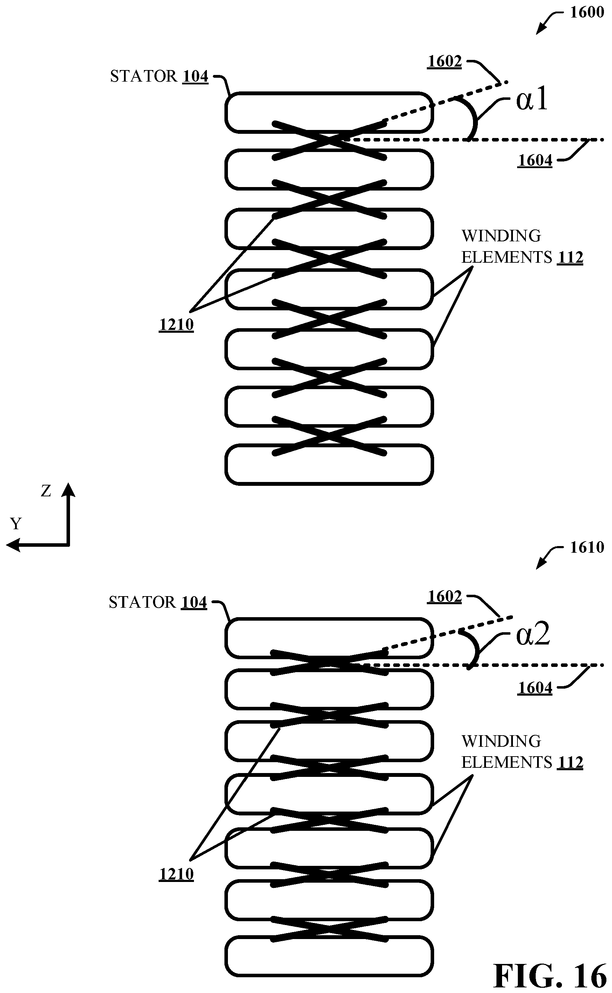

FIG. 16 illustrates diagrams of example, non-limiting topologies 1600 and 1610 of the stator unit of an electric motor wherein individual stator segments can be interconnected by dynamic mechanical linkage systems in accordance with one or more embodiments described herein. Repetitive description of like elements and/or processes employed in respective embodiments is omitted for sake of brevity.

As described in various embodiments herein, electric motor 102 can comprise stator unit 104. Stator unit 104 can comprise a plurality of dynamic mechanical linkage systems that can interconnect respective ones of the plurality of winding elements 112, and respective dynamic mechanical linkage systems of stator unit 104 can have identical configurations. In some embodiments, the dynamic mechanical linkage systems comprised in stator unit 104 can act as a truss system to interconnect the plurality of winding elements 112. Winding elements 112 can be concentrated winding elements or distributed winding elements. Electric motor 102 can further comprise rotor unit 106 comprising one or more shuttles 114 that can be magnetically coupled to the plurality of winding elements 112 and mechanically coupled to a rail structure of stator unit 104, and the one or more shuttles 114 can follow a circumferential length of stator unit 104 during operation of electric motor 102, for example, to operate a wheel of an electric vehicle. In some embodiments, rotor unit 106 can comprise a plurality of shuttles 1106 that can be interconnected by mechanical or magnetic connections.

Non-limiting topology 1600 illustrates a topology of stator unit 104 where dynamic mechanical linkage systems 1210 employed in electric motor 102 to couple winding elements 112 of stator unit 104 can be in an extended configuration, resulting in a wider gap between winding elements 112. On the contrary, non-limiting topology 1610 illustrates a topology of stator unit 104 where dynamic mechanical linkage systems 1210 employed in electric motor 102 to couple winding elements 112 of stator unit 104 can be in a contracted configuration, resulting in a reduced gap between winding elements 112, as compared to that resulting from non-limiting topology 1600. Additionally, as illustrated, the angle α1 between lines 1602 and 1604 in the extended configuration of a dynamic mechanical linkage system 1210 illustrated in non-limiting topology 1600 can be greater than the angle α2 in the contracted configuration of the dynamic mechanical linkage system 1210 between lines 1602 and 1604 in the configuration illustrated in non-limiting topology 1610, wherein line 1602 is an imaginary line that is parallel to a link of the dynamic mechanical linkage system 1210 in either configuration, and line 1604 is an imaginary line that is parallel to the Y-axis and passing through the central joint of the dynamic mechanical linkage system 1210 in either configuration. The configuration of a single dynamic mechanical linkage system that can be employed to coupled winding elements 112 is illustrated in FIG. 17. In some embodiments, such a configuration of dynamic mechanical linkage system 1210 can also be employed to coupled shuttles 114 of rotor unit 106.

FIG. 17 illustrates a diagram of example, non-limiting system 1700 comprising a dynamic mechanical linkage system that can couple consecutive segments of the stator unit of an electric motor in accordance with one or more embodiments described herein. Repetitive description of like elements and/or processes employed in respective embodiments is omitted for sake of brevity.

Non-limiting system 1700 illustrates the dynamic mechanical linkage system described in one or more embodiments herein coupled to winding element 1702 and winding element 1704. In FIG. 17, the dynamic mechanical linkage system is illustrated as the shaded portions. Winding elements 1702 and 1704 can represent individual winding elements of the plurality of winding elements 112 positioned along the contour of stator unit 104 comprised in electric motor 102. In various embodiments, the dynamic mechanical linkage system can allow a circumferential length of stator unit 104 to be altered during operation of an electric vehicle comprising electric motor 102, by allowing the distances between consecutive winding elements of the plurality of winding elements 112 to be altered along the Z axis. For example, the scissor mechanism of the dynamic mechanical linkage system can comprise two links (links 1714) that can be coupled to one another via joint 1710. Joint 1710 can be a pin connection, such as illustrated in FIG. 17, or other type of suitable connection that can allow links 1714 with joint 1710 as the rotational center for links 1714. The arrow at joint 1710 illustrates a direction of travel of the pin or screw, for example, into a fastener to form a pin connection at joint 1710.

Further, each link of the scissor mechanism can be connected to ball joints at the distal ends of the link, such that a first set of ball joints can connect the two links to winding element 1702 of the pair of consecutive winding elements, and a second set of ball joints can connect the two links to winding element 1704 of the pair of consecutive winding elements. In FIG. 17, joints 1712 can represent the first set of ball joints and joints 1716 can represent the second set of ball joints. Joints 1712 and joints 1716 can be identical in design. Joints 1712 can be located inside grooves 1706 provided in winding element 1702 (e.g., in a slot of winding element 1702 of stator unit 104), and joints 1716 can be located inside grooves 1708 provided in winding element 1704 (e.g., in a slot of winding element 1704 of stator unit 104). The respective ball joints of the joints 1712 and 1716 can move inside their respective grooves along the Y axis, and in conjunction with joint 1710, such movement of the ball joints can cause the links 1714 of the scissor mechanism to perform a scissoring action such that as the ball joints travel towards each other, as indicated by the arrows on winding elements 1702 and 1704, winding elements 1702 and 1704 can move farther apart, and as the ball joints travel away from each other, winding elements 1702 and 1704 can move towards each other. Thus, the ball joints can move along the Y axis in a translational motion and around the Y axis in a rotational motion, and the ball joints can allow the dynamic mechanical linkage system to move around the Y axis to alter the circumferential length of stator unit 104 during operation of electric motor 102, for example, to drive an electric vehicle. Stated differently, during elongation of the circumferential length of stator unit 104, the ball joints and the plurality of winding elements 112 can have a torsion around the Y axis. In this regard, stator unit 104 can act as a control parameter to reduce the circumference of electric motor 102.

In various embodiments, links 1714 can be controlled by an electromagnetic system or a mechatronic system that can be automatized. In some embodiments, links 1714 can be telescoping elements. In various embodiments, a casing or housing of electric motor 102 can have contraction and expansion capabilities, such that the overall shape and size of electric motor 102 can be modified according to the circumferential length of stator unit 104. For example, an activation system can be employed to change the directions of the scissor mechanisms inside respective dynamic mechanical linkage systems or stator unit 104 and rotor unit 106 can be placed in an accordion style casing that can be externally controlled to contract and expand according to the circumferential length of stator unit 104. In some embodiments, the plurality of winding elements 112 can move in empty space around stator unit 104, to allow the shape and size of electric motor 102 to alter according to the shape and size of stator unit 104. In other embodiments, the electric vehicle operated by electric motor 102 can control stator unit 104 such that the plurality of winding elements 112 can automatically reposition themselves in a space allowed by the electric vehicle, for example, based on positioning of the cabin of the electric vehicle.

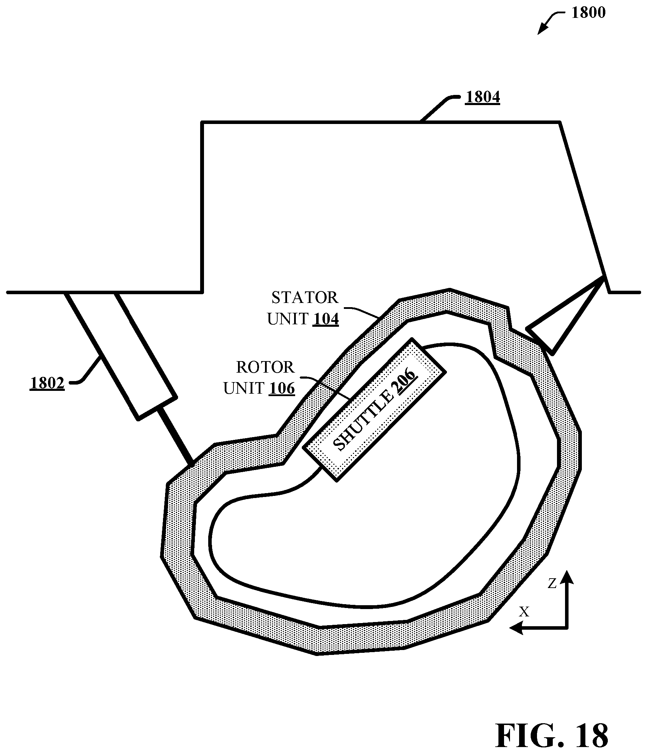

FIG. 18 illustrates a diagram of example, non-limiting mechanism 1800 to integrate an electric motor that can be modified in shape and size in an electric vehicle in accordance with one or more embodiments described herein. Repetitive description of like elements and/or processes employed in respective embodiments is omitted for sake of brevity.

With continued reference to the embodiments described heretofore in this specification, electric motor 102 can be integrated into an electric vehicle via a mechanism such as non-limiting mechanism 1800. For example, in various embodiments, element 1802 can be a controllable telescopic device/element/arm that can be employed in an electric vehicle operated by electric motor 102 to control the circumferential length of stator unit 104. Element 1802 can be connected to subframe element 1804. More specifically, in various embodiments, at least one controllable telescopic arm such as element 1802 can be implemented in an electric vehicle to allow for contraction and expansion of stator unit 104 via controlled motion of winding elements 112. Element 1802 can be connected to a vehicle hardpoint such as subframe element 1804 at one end, and element 1802 can enlarge or contract electric motor 102 by pushing or pulling the connection to stator unit 104 during operation of the electric vehicle, based on commands provided by an entity (e.g., hardware, software, AI, neural network, machine and/or user) operating the electric vehicle. The entity can provide the commands via controls accessible to the entity inside the cabin of the electric vehicle. Subframe element 1804 can be coupled to stator unit 104 via two telescopic arms such as element 1802, wherein one telescopic arm can control one half of the circumferential length of stator unit 104 and another telescopic arm can control the other half of the circumferential length of stator unit 104. For increased control, additional connections to hardpoints of the electric vehicle and/or additional controllable telescopic arms per quadrant of stator unit 104 can be implemented in the electric vehicle.

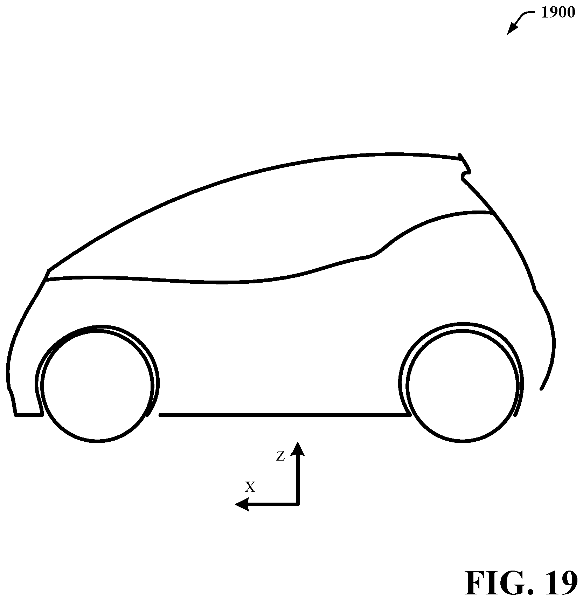

FIG. 19 illustrates a diagram of example, non-limiting electric vehicle 1900 that can employ an electric motor that can be modified in shape and size in accordance with one or more embodiments described herein. Repetitive description of like elements and/or processes employed in respective embodiments is omitted for sake of brevity.

As discussed with reference to at least FIG. 1, non-limiting electric vehicle 1900 can represent a type of vehicle that can be operated by electric motor 102 or by multiple electric motors having the same configuration as that of electric motor 102. For example, non-limiting electric vehicle 1900 can be a small sized city vehicle, an urban mobility vehicle, a mobility vehicle for individuals with disabilities, a goods and services delivery vehicle, an inner-city transport vehicle, a connecting vehicle or transport to and from bus stops or terminal transport hubs, or another small vehicle that can be employed in locations such as airports, shopping malls, etc. In one or more embodiments, electric motor 102 can be employed to operate one or more wheels of non-limiting electric vehicle 1900 without employing a gearbox or by employing a simpler gearbox (e.g., with only one or two gears or an electromagnetic gearbox) as compared to a traditional gearbox that can consume significant real estate in the electric vehicle. The real estate released by employing electric motor 102 can allow vehicles such as non-limiting electric vehicle 1900 to have a compact design, which can be advantageous in cities with limited amounts of parking spaces. Such vehicles can also be more affordable.

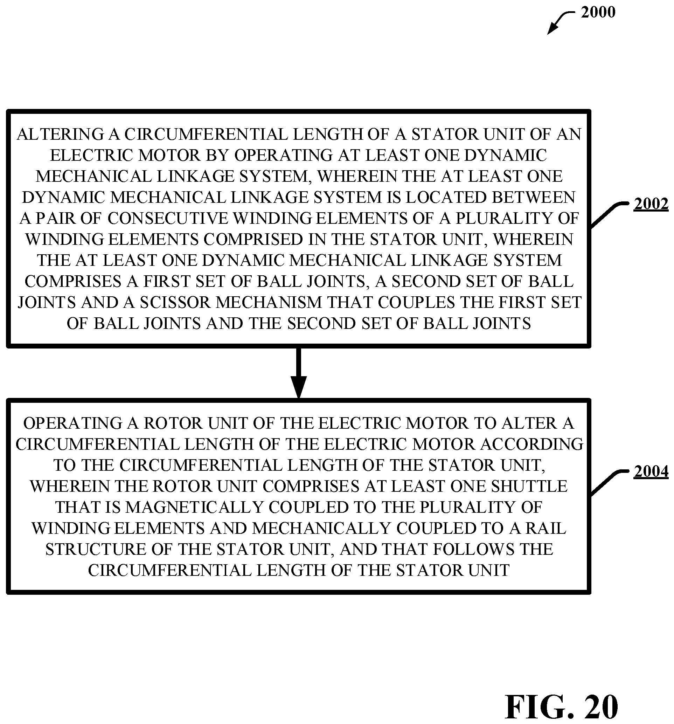

FIG. 20 illustrates a flow diagram of an example, non-limiting method 2000 to adjust the circumferential length of the stator unit of an electric motor in accordance with one or more embodiments described herein. Repetitive description of like elements and/or processes employed in respective embodiments is omitted for sake of brevity.

At 2002, non-limiting method 2000 can comprise altering a circumferential length of a stator unit of an electric motor by operating at least one dynamic mechanical linkage system, wherein the at least one dynamic mechanical linkage system is located between a pair of consecutive winding elements of a plurality of winding elements comprised in the stator unit, wherein the at least one dynamic mechanical linkage system comprises a first set of ball joints, a second set of ball joints and a scissor mechanism that couples the first set of ball joints and the second set of ball joints.

At 2004, non-limiting method 2000 can comprise operating a rotor unit of the electric motor to alter a circumferential length of the electric motor according to the circumferential length of the stator unit, wherein the rotor unit comprises at least one shuttle that is magnetically coupled to the plurality of winding elements and mechanically coupled to a rail structure of the stator unit, and that follows the circumferential length of the stator unit.

For simplicity of explanation, the computer-implemented and/or non-computer-implemented methodologies provided herein are depicted and/or described as a series of acts. It is to be understood that the subject innovation is not limited by the acts illustrated and/or by the order of acts, for example acts can occur in one or more orders and/or concurrently, and with other acts not presented and described herein. Furthermore, not all illustrated acts can be utilized to implement the computer-implemented and/or non-computer-implemented methodologies in accordance with the described subject matter.

The description of illustrated embodiments of the subject disclosure as provided herein, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as one skilled in the art can recognize. In this regard, while the subject matter has been described herein in connection with various embodiments and corresponding drawings, where applicable, it is to be understood that other similar embodiments can be used or modifications and additions can be made to the described embodiments to perform the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

Further aspects of various embodiments described herein are provided by the subject matter of the following clauses:
CLAUSE 1: An electric motor, comprising: a stator unit comprising a plurality of winding elements, wherein each pair of consecutive winding elements of the plurality of winding elements is coupled by a dynamic mechanical linkage system comprising a first set of ball joints, a second set of ball joints and a scissor mechanism that couples the first set of ball joints and the second set of ball joints.
CLAUSE 2: The electric motor of any preceding clause, wherein the dynamic mechanical linkage system allows a circumferential length of the stator unit to be altered during operation of the electric motor, and wherein the stator unit comprises multiple dynamic mechanical linkage systems located between pairs of consecutive winding elements of the plurality of winding elements and having a configuration identical to that of the dynamic mechanical linkage system.
CLAUSE 3: The electric motor of any preceding clause, further comprising: a rotor unit comprising at least one shuttle that is magnetically coupled to the plurality of winding elements and mechanically coupled to a rail structure of the stator unit, and wherein the at least one shuttle follows a circumferential length of the stator unit, such that a circumferential length of the electric motor is altered according to a circumferential length of the stator unit.
CLAUSE 4: The electric motor of any preceding clause, wherein the at least one shuttle comprises segmented magnetic pole arrangements.
CLAUSE 5: The electric motor of any preceding clause, wherein the rotor unit comprises a plurality of shuttles that are magnetically coupled to the plurality of winding elements, mechanically coupled to the rail structure and magnetically or mechanically interconnected to allow the plurality of shuttles to follow the circumferential length of the stator unit, such that the circumferential length of the electric motor is altered according to the circumferential length of the stator unit.
CLAUSE 6: The electric motor of any preceding clause, wherein respective shuttles of the plurality of shuttles comprise segmented magnetic pole arrangements, and wherein the plurality of shuttles are separated by buffer zones.
CLAUSE 7: The electric motor of any preceding clause, wherein one or more shuttles of the rotor unit are connected to a wheel of an electric vehicle via one or more link arms that move freely inside grooves provided in the one or more shuttles, and wherein the one or more shuttles are connected to the wheel without employing a gearbox.
CLAUSE 8: The electric motor of any preceding clause, wherein respective winding elements of the plurality of winding elements are coupled to each other in an articulating loop, and wherein the plurality of winding elements are interconnected for structural integrity.
CLAUSE 9: The electric motor of any preceding clause, wherein the respective winding elements comprise soft magnet cores, and wherein the respective winding elements and the soft magnet cores further allow the respective winding elements to form the articulating loop.
CLAUSE 10: The electric motor of any preceding clause, wherein the plurality of winding elements comprise concentrated winding elements or distributed winding elements.
CLAUSE 11: The electric motor of clause 1 above with any set of combinations of clauses 2 - 10 above.
CLAUSE 12: A method, comprising: altering a circumferential length of a stator unit of an electric motor by operating at least one dynamic mechanical linkage system, wherein the at least one dynamic mechanical linkage system is located between a pair of consecutive winding elements of a plurality of winding elements comprised in the stator unit, wherein the at least one dynamic mechanical linkage system comprises a first set of ball joints, a second set of ball joints and a scissor mechanism that couples the first set of ball joints and the second set of ball joints.
CLAUSE 13: The method of any preceding clause, further comprising: altering the circumferential length of the stator unit during operation of the electric motor.
CLAUSE 14: The method of any preceding clause, further comprising: operating a rotor unit of the electric motor to alter a circumferential length of the electric motor according to the circumferential length of the stator unit, wherein the rotor unit comprises at least one shuttle that is magnetically coupled to the plurality of winding elements and mechanically coupled to a rail structure of the stator unit, and that follows the circumferential length of the stator unit.
CLAUSE 15: The method of any preceding clause, further comprising: operating the rotor unit of the electric motor to alter the circumferential length of the electric motor according to the circumferential length of the stator unit, wherein the rotor unit comprises a plurality of shuttles that are magnetically coupled to the plurality of winding elements, mechanically coupled to the rail structure and magnetically or mechanically interconnected to allow the plurality of shuttles to follow the circumferential length of the stator unit, such that the circumferential length of the electric motor is altered according to the circumferential length of the stator unit.
CLAUSE 16: The method of any preceding clause, further comprising: operating the electric motor to drive a wheel of an electric vehicle, without employing a gearbox, via one or more link arms connected to one or more shuttles of the rotor unit, wherein the one or more link arms move freely inside grooves provided in the one or more shuttles.
CLAUSE 17: The method of any preceding clause, wherein respective winding elements of the plurality of winding elements are coupled to each other in an articulating loop, and wherein the plurality of winding elements are interconnected for structural integrity.
CLAUSE 18: The method of any preceding clause, wherein the respective winding elements comprise soft magnet cores, and wherein the respective winding elements and the soft magnet cores further allow the respective winding elements to form the articulating loop.
CLAUSE 19: The method of any preceding clause, wherein the plurality of winding elements comprise concentrated winding elements or distributed winding elements.
CLAUSE 20: The method of clause 12 above with any set of combinations of clauses 13 - 19 above.
CLAUSE 21: An electric motor, comprising: a stator unit comprising a plurality of winding elements, wherein each pair of consecutive winding elements of the plurality of winding elements is coupled by a dynamic mechanical linkage system comprising a first set of ball joints, a second set of ball joints and a scissor mechanism that couples the first set of ball joints and the second set of ball joints; and a rotor unit comprising one or more shuttles that are connected to a wheel of an electric vehicle, wherein the electric motor operates the wheel without employing a gearbox.
CLAUSE 22: The electric motor of any preceding clause, wherein the dynamic mechanical linkage system allows a circumferential length of the stator unit to be altered during operation of the electric motor.
CLAUSE 23: The electric vehicle of clause 21 above with any set of combinations of clauses 21 and 22 above.

## Claims

1. An electric motor, comprising:
a stator unit comprising a plurality of winding elements, wherein each pair of consecutive winding elements of the plurality of winding elements is coupled by a dynamic mechanical linkage system comprising a first set of ball joints, a second set of ball joints and a scissor mechanism that couples the first set of ball joints and the second set of ball joints.

2. The electric motor according to claim 1, wherein the dynamic mechanical linkage system allows a circumferential length of the stator unit to be altered during operation of the electric motor, and wherein the stator unit comprises multiple dynamic mechanical linkage systems located between pairs of consecutive winding elements of the plurality of winding elements and having a configuration identical to that of the dynamic mechanical linkage system.

3. The electric motor according to claim 1, further comprising:
a rotor unit comprising at least one shuttle that is magnetically coupled to the plurality of winding elements and mechanically coupled to a rail structure of the stator unit, and wherein the at least one shuttle follows a circumferential length of the stator unit, such that a circumferential length of the electric motor is altered according to a circumferential length of the stator unit.

4. The electric motor according to claim 3, wherein the at least one shuttle comprises segmented magnetic pole arrangements.

5. The electric motor according to claim 3, wherein the rotor unit comprises a plurality of shuttles that are magnetically coupled to the plurality of winding elements, mechanically coupled to the rail structure and magnetically or mechanically interconnected to allow the plurality of shuttles to follow the circumferential length of the stator unit, such that the circumferential length of the electric motor is altered according to the circumferential length of the stator unit.

6. The electric motor according to claim 5, wherein respective shuttles of the plurality of shuttles comprise segmented magnetic pole arrangements, and wherein the plurality of shuttles are separated by buffer zones.

7. The electric motor according to claim 3, wherein one or more shuttles of the rotor unit are connected to a wheel of an electric vehicle via one or more link arms that move freely inside grooves provided in the one or more shuttles, and wherein the one or more shuttles are connected to the wheel without employing a gearbox.

8. The electric motor according to claim 1, wherein respective winding elements of the plurality of winding elements are coupled to each other in an articulating loop, and wherein the plurality of winding elements are interconnected for structural integrity.

9. The electric motor according to claim 8, wherein the respective winding elements comprise soft magnet cores, and wherein the respective winding elements and the soft magnet cores further allow the respective winding elements to form the articulating loop.

10. The electric motor according to claim 1, wherein the plurality of winding elements comprise concentrated winding elements or distributed winding elements.

11. A method, comprising:
altering a circumferential length of a stator unit of an electric motor by operating at least one dynamic mechanical linkage system, wherein the at least one dynamic mechanical linkage system is located between a pair of consecutive winding elements of a plurality of winding elements comprised in the stator unit, wherein the at least one dynamic mechanical linkage system comprises a first set of ball joints, a second set of ball joints and a scissor mechanism that couples the first set of ball joints and the second set of ball joints.

12. The method according to claim 11, further comprising:
altering the circumferential length of the stator unit during operation of the electric motor.

13. The method according to claim 11, further comprising:
operating a rotor unit of the electric motor to alter a circumferential length of the electric motor according to the circumferential length of the stator unit, wherein the rotor unit comprises at least one shuttle that is magnetically coupled to the plurality of winding elements and mechanically coupled to a rail structure of the stator unit, and that follows the circumferential length of the stator unit.

14. The method according to claim 13, further comprising:
operating the rotor unit of the electric motor to alter the circumferential length of the electric motor according to the circumferential length of the stator unit, wherein the rotor unit comprises a plurality of shuttles that are magnetically coupled to the plurality of winding elements, mechanically coupled to the rail structure and magnetically or mechanically interconnected to allow the plurality of shuttles to follow the circumferential length of the stator unit, such that the circumferential length of the electric motor is altered according to the circumferential length of the stator unit.

15. An electric motor, comprising:
a stator unit comprising a plurality of winding elements, wherein each pair of consecutive winding elements of the plurality of winding elements is coupled by a dynamic mechanical linkage system comprising a first set of ball joints, a second set of ball joints and a scissor mechanism that couples the first set of ball joints and the second set of ball joints; and
a rotor unit comprising one or more shuttles that are connected to a wheel of an electric vehicle, wherein the electric motor operates the wheel without employing a gearbox.
